(19) Europäisches Patentamt

European Patent Office

Office européen des brevets

(11) **EP 0 767 543 A2**

(12) **EUROPÄISCHE PATENTANMELDUNG**

(43) Veröffentlichungstag:
09.04.1997 Patentblatt 1997/15

(51) Int. Cl.$^6$: **H04B 1/707**

(21) Anmeldenummer: 96115679.1

(22) Anmeldetag: 30.09.1996

(84) Benannte Vertragsstaaten:
**DE FR GB**

(30) Priorität: **06.10.1995 DE 19537371**

(71) Anmelder: **SIEMENS AKTIENGESELLSCHAFT**
**80333 München (DE)**

(72) Erfinder:
• **Baier, Paul-Walter, Prof. Dr. Ing.**
**67661 Kaiserslautern (DE)**
• **Nasshan, Markus**
**46395 Bocholt (DE)**
• **Steiner, Bernd**
**66955 Pirmasens (DE)**

(54) **Kodemultiplexnachrichtenübertragung mit Interferenzunterdrückung**

(57) In einem mit Codemultiplex (CDMA = Code Division Multiple Access) Funksystem wird vor der empfangsseitigen Datendetektion die Interferenz der Trainingssequenzen, z.B. Mittambeln, aller $K$ Teilnehmer im Empfangssignal dadurch beseitigt, daß mit den geschätzten Kanalimpulsantworten die Interferenz der Trainingssequenzen aller $K$ Teilnehmer nachgebildet und schließlich vom Empfangssignal subtrahiert wird. Die Erfindung läßt sich in CDMA-Mobilfunksystemen, insbesondere mit Joint-Detection, einsetzen.

FIG 3

EP 0 767 543 A2

Printed by Rank Xerox (UK) Business Services
2.14.2/3.4

**Beschreibung**

Die Erfindung bezieht sich auf ein Verfahren zur Funkübertragung digitaler Signale gemäß dem Oberbegriff des Patentanspruchs 1.

Darüber hinaus bezieht sich die Erfindung auf ein System zur Funkübertragung digitaler Signale.

Aus DE 43 29 317 A1 ist bereits ein digitales Nachrichtenübertragungssystem mit Burstübertragung und Codemultiplex bekannt. Als Anwendung für ein solches Nachrichtenübertragungssystem kommt insbesondere der digitale Mobilfunk in Betracht. In Mobilfunksystemen greift eine Vielzahl von mobilen Teilnehmern auf das Übertragungsmedium Funkkanal zu. Das daraus resultierende Vielfachzugriffsproblem läßt sich mit den elementaren Vielfachzugriffsverfahren "Frequenzmultiplex" (Frequency Division Multiple Access, FDMA), "Zeitmultiplex" (Time Division Multiple Access, TDMA) oder "Codemultiplex" (Code Division Multiple Access, CDMA) oder mit Kombinationen dieser Verfahren lösen. In CDMA-Mobilfunksystemen senden mehrere Teilnehmer gleichzeitig im gleichen Frequenzband. Aus diesem Grunde wird das gesamte Empfangssignal durch die Beiträge mehrerer Teilnehmer bestimmt. Durch das Anwenden optimaler Schätzalgorithmen lassen sich die verschiedenen Teilnehmersignale trennen und die von den einzelnen Teilnehmern gesendeten Daten ermitteln. Damit die genannten Schätzalgorithmen eingesetzt werden können, ist es erforderlich, daß die Kanalimpulsantworten der Funkkanäle der einzelnen Teilnehmer bekannt sind. Dem Empfänger wird das Gewinnen dieser Information in der Regel dadurch möglich gemacht, daß in die Sendesignale Signalabschnitte eingeblendet werden, die mit dem Empfänger vorher vereinbart wurden und somit im Empfänger bekannt sind, so daß der Empfänger aus der Antwort des Kanals auf diese bekannten Signalabschnitte die Kanalimpulsantworten ermittelt. Die eingeblendeten Signalabschnitte zur Ermittlung der Kanalimpulsantworten werden als Trainingssequenzen bezeichnet. Es wird davon ausgegangen, daß die Signalübertragung blockweise erfolgt, wobei ein gesendeter Block als Burst bezeichnet wird. Ein solcher Burst besteht beispielsweise jeweils aus einer Trainingssequenz in Form einer spezifischen Mittambel zur Kanalschätzung und zwei diese Mittambel umgebenden Datenblöcken. Der Burst kann auch aus jeweils einer Trainingssequenz in Form einer spezifischen Präambel zur Kanalschätzung und einem dieser Präambel nachfolgenden Datenblock zusammengesetzt sein. Ein Burst kann aber z.B. auch jeweils aus einer Trainingssequenz in Form einer spezifischen Postambel zur Kanalschätzung und einem dieser Postambel vorausgehenden Datenblock bestehen. Die Trainingssequenz kann innerhalb eines Bursts auch sonstwie geartet sein.

Im Empfangssignal können Symbolinterferenzen durch Anteile der Trainingssequenzen entstehen, d.h. es gibt Werte des Empfangssignals, die sowohl durch Datensymbole als auch durch die Trainingssequenzen bestimmt sind. Diese durch Trainingssequenzanteile hervorgerufenen Interferenzen entstehen beispielsweise bei Verwendung einer Mittambel als Trainingssequenz am Ende des in einem Burst jeweils vor der Mittambel übertragenen Datenblocks und am Anfang des in einem Burst jeweils nach der Mittambel gesendeten Datenblocks. Diese Interferenzen führen bei der anschließenden Datendetektion auch bei Vorhandensein eines hohen Signal/Rausch-Verhältnisses zu einer codierten Bitfehlerrate von mehr als $10^{-2}$.

Aufgabe der Erfindung ist es, die schädliche Wirkung dieser Interferenzen zu vermeiden und somit die Bitfehlerrate der detektierten Daten zu verringern.

Diese Aufgabe wird bei einem gattungsgemäßen Verfahren durch die im kennzeichnenden Teil des Patentanspruchs 1 angegebenen Merkmale gelöst.

Zweckmäßige Weiterbildungen des Verfahrens nach der Erfindung sind in Unteransprüchen zum Anspruch 1 angegeben.

Ein vorteilhaftes System zur Funkübertragung digitaler Signale nach der Erfindung ist im Anspruch 15 angegeben. Zweckmäßige Weiterbildungen dieses Systems enthalten Unteransprüche zu Anspruch 15.

Das Abziehen der Trainingssequenz-Interferenz ist für 1-Teilnehmer-Systeme, also für Nicht-CDMA-Systeme, aus Crozier, S.N.: Short-Block Data Detection Techniques Employing Channel Estimation for Fading Time-Dispersive Channels. Dissertation, Carleton University, Ottawa, Ontario, 26. März 1990, bekannt.

Der erfindungsgemäße Lösungsweg wird im folgenden anhand von Zeichnungen dargelegt.

Es zeigen:

Fig. 1    ein für das Verfahren nach der Erfindung vorgesehenes Signalformat,
Fig. 2    ein Systemmodell der Übertragungsstrecke,
Fig. 3    die Struktur eines empfangenen Teilnehmersignals,
Fig. 4    das Prinzip zur Gewinnung der Codefamilie aus einem periodisierten Grundcode,
Fig. 5    die Struktur von Datendetektoren, die aus einem linearen Blockentzerrer und einer nachfolgenden Quantisierungsstufe bestehen,
Fig. 6    die Blockschaltbildstruktur eines Teilnehmersenders in einem JD-CDMA-Mobilfunksystem, und
Fig. 7    die Blockschaltbildstruktur eines Empfängers in einer Basisstation eines JD-CDMA-Mobilfunksystems.

Es wird im folgenden als beispielhaft ausgewähltes Übertragungssystem ein sogenanntes JD-CDMA-Mobilfunksystem behandelt. Dabei wird ausschließlich die schwierigere Aufwärtsstrecke betrachtet, d.h. die Verbindung von den mobilen Teilnehmern zur ortsfesten Basisstation. Digitale Mobilfunksysteme sind meist zellulare Systeme. Betrachtet wird im folgenden eine einzelne Zelle des JD-CDMA-Mobilfunksystems. Es wird von zeitdiskreten Signalen ausgegangen, die reell oder komplex sein können, wobei zeitdiskrete komplexe Signale endlicher Länge bzw. komplexe Folgen endlicher Länge durch Vektoren dargestellt werden, bei denen das $\nu$-te Folgenelement gleich der $\nu$-ten Komponente des entsprechenden Vektors ist. Die Begriffe Element und Komponente eines Vektors werden gleichbedeutend verwendet. Vektoren werden im folgenden durch fettgedruckte Kleinbuchstaben und Matrizen durch fettgedruckte Großbuchstaben repräsentiert. Die Operation des Transponierens eines Vektors bzw. einer Matrix wird durch $(\cdot)^T$ dargestellt. Das Bilden des Erwartungswertes einer Zufallsgröße wird durch $E\{\cdot\}$ gekennzeichnet. Komplexe Größen werden unterstrichen. Die komplexe Konjugation einer Größe wird durch $(\cdot)^*$ dargestellt. Im folgenden werden die mobilen Teilnehmer kurz als Teilnehmer und die orstsfeste Basisstation kurz als Basisstation bezeichnet. Größen, die dem $k$-ten Teilnehmer zugeordnet sind, werden durch ein hochgestelltes $(k)$ gekennzeichnet.

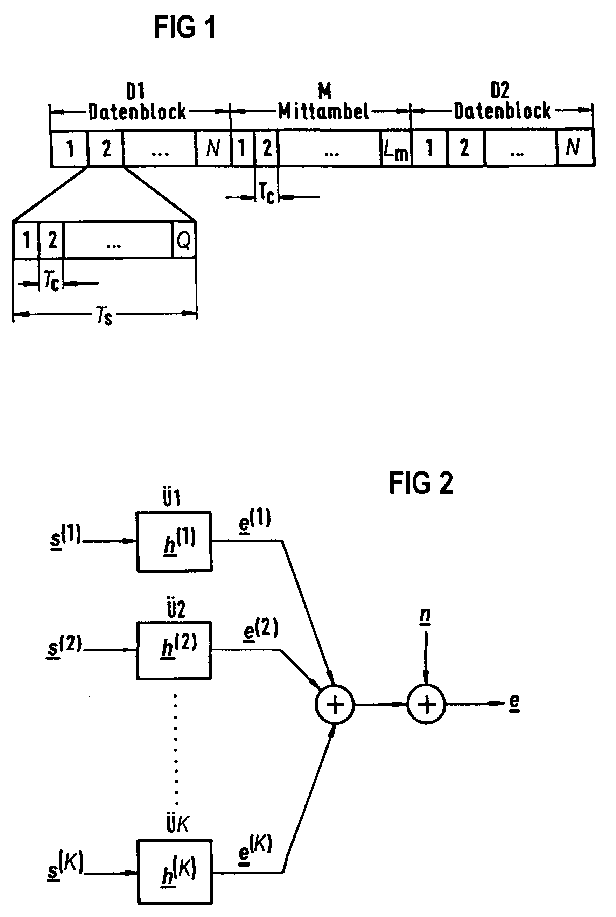

Das betrachtete JD-CDMA-Mobilfunksystem verwendet eine Kombination der Vielfachzugriffsverfahren FDMA/TDMA/CDMA. In einem Zeitschlitz des Zeitrahmens sind $K$ Teilnehmer gleichzeitig im gleichen Frequenzband aktiv und werden nur durch die teilnehmerspezifischen CDMA-Codes unterschieden. Die Nachrichtenübertragung erfolgt in Bursts. Fig. 1 zeigt die Struktur der Bursts, die von den $K$ Teilnehmern gesendet werden. Jeder Burst besteht aus einer Trainingssequenz in Form einer Mittambel M und aus zwei Datenblöcken D1 und D2, die vor und nach der Mittambel M gesendet werden. Die Mittambeln M enthalten teilnehmerspezifische Testsignale, die dem Empfänger in der Basisstation bekannt sind und dort eine Kanalschätzung ermöglichen. Die Mittambel M des $k$-ten Teilnehmers besteht aus $L_m$ Elementen $\underline{m}_i^{(k)}$ und wird durch den Vektor

$$\underline{\boldsymbol{m}}^{(k)} = \left(\underline{m}_1^{(k)}, \underline{m}_2^{(k)} \ldots \underline{m}_{L_m}^{(k)}\right)^T, \quad \underline{m}_i^{(k)} \in \underline{V}_m, \quad \underline{V}_m \subset \mathbb{C}, \quad i = 1 \ldots L_m, \quad k = 1 \ldots K, \quad (1)$$

dargestellt. Der Vektor $\underline{m}^{(k)}$, $k=1\ldots K$, wird auch als Mittambelcode des $k$-ten Teilnehmers bezeichnet. Die Folge der Elemente $\underline{m}_i^{(k)}$, $i=1\ldots L_m$, $k=1\ldots K$, des Mittambelcodes $\underline{m}^{(k)}$, $k=1\ldots K$, des $k$-ten Teilnehmers, die mit der Rate $1/T_c$ gesendet wird, ist gleich dem zeitdiskreten Sendesignal der Mittambel M des $k$-ten Teilnehmers. Die Datenblöcke D1 und D2 vor bzw. nach der Mittambel M bestehen aus jeweils $N$ Datensymbolen $\underline{d}_n^{(k,i)}$, die durch die Vektoren

$$\begin{aligned} \underline{\boldsymbol{d}}^{(k,i)} &= \left(\underline{d}_1^{(k,i)}, \underline{d}_2^{(k,i)} \ldots \underline{d}_N^{(k,i)}\right)^T, \\ &\underline{d}_n^{(k,i)} \in \underline{V}_d, \quad \underline{V}_d \subset \mathbb{C}, \quad n = 1 \ldots N, \quad k = 1 \ldots K, \quad i = 1, 2, \end{aligned} \quad (2)$$

dargestellt werden. Der Vektor $\underline{d}^{(k,1)}$, $k=1\ldots K$, bezeichnet den Datenblock D1 des $k$-ten Teilnehmers vor der Mittambel M und $\underline{d}^{(k,2)}$, $k=1\ldots K$, den Datenblock D2 des $k$-ten Teilnehmers nach der Mittambel M. Die Datensymbole $\underline{d}_n^{(k,i)}$, $n=1\ldots N$, $k=1\ldots K$, $i=1,2$, sind dem $\tilde{M}$-wertigen Symbolvorrat

$$\underline{V}_d = \left\{\underline{v}_{d,1}, \underline{v}_{d,2} \ldots \underline{v}_{d,M}\right\}, \quad \underline{v}_{d,\mu} \in \mathbb{C}, \quad \mu = 1 \ldots M, \quad (3)$$

entnommen. Jedem Teilnehmer wird ein teilnehmerspezifischer CDMA-Code

$$\underline{\boldsymbol{c}}^{(k)} = \left(\underline{c}_1^{(k)}, \underline{c}_2^{(k)} \ldots \underline{c}_Q^{(k)}\right)^T, \quad \underline{c}_q^{(k)} \in \underline{V}_c, \quad \underline{V}_c \subset \mathbb{C}, \quad q = 1 \ldots Q, \quad k = 1 \ldots K, \quad (4)$$

mit $Q$ Elementen zugeordnet. Die Elemente $\underline{c}_q^{(k)}$, $q=1\ldots Q$, $k=1\ldots K$, des teilnehmerspezifischen CDMA-Codes $\underline{c}^{(k)}$, $k=1\ldots K$, des $k$-ten Teilnehmers sind dem $M$-wertigen Symbolvorrat

$$\underline{V}_c = \left\{\underline{v}_{c,1}, \underline{v}_{c,2} \ldots \underline{v}_{c,\tilde{M}}\right\}, \quad \underline{v}_{c,\mu} \in \mathbb{C}, \quad \mu = 1 \ldots \tilde{M}, \quad (5)$$

entnommen. Mit der teilnehmerspezifischen $NQ$ x $N$-Matrix

$$\underline{C}^{(k)} = \begin{pmatrix} \underline{c}_1^{(k)} & 0 & \ldots & 0 \\ \underline{c}_2^{(k)} & 0 & \ldots & 0 \\ \vdots & \vdots & \vdots & \vdots \\ \underline{c}_Q^{(k)} & 0 & \ldots & 0 \\ 0 & \underline{c}_1^{(k)} & \ldots & 0 \\ 0 & \underline{c}_2^{(k)} & \ldots & 0 \\ \vdots & \vdots & \vdots & \vdots \\ 0 & \underline{c}_Q^{(k)} & \ldots & \ldots \\ \vdots & \vdots & \vdots & \vdots \\ 0 & 0 & \ldots & \underline{c}_1^{(k)} \\ 0 & 0 & \ldots & \underline{c}_2^{(k)} \\ \vdots & \vdots & \vdots & \vdots \\ 0 & 0 & \ldots & \underline{c}_Q^{(k)} \end{pmatrix}, \quad k = 1\ldots K,$$

$$\underline{C}^{(k)} = \left( \underline{C}_{i,j}^{(k)} \right), \quad i = 1\ldots NQ, \quad j = 1\ldots N, \quad k = 1\ldots K,$$

$$\underline{C}_{q+(n-1)Q,n}^{(k)} = \begin{cases} \underline{c}_q^{(k)} & \text{für} \quad \begin{aligned} n &= 1\ldots N, \\ q &= 1\ldots Q, \\ k &= 1\ldots K, \end{aligned} \\ 0 & \text{sonst,} \end{cases} \tag{6}$$

des $k$-ten Teilnehmers läßt sich das zeitdiskrete Sendesignal $\underline{s}_d^{(k,i)}$, $k=1\ldots K$, $i=1,2$, des $i$-ten Datenblocks $\underline{d}^{(k,i)}$, $k=1\ldots K$, $i=1,2$, des $k$-ten Teilnehmers nach Gleichung (2) durch die Matrix-Vektor Multiplikation

$$\underline{s}_d^{(k,i)} = \left( \underline{s}_{d,1}^{(k,i)}, \underline{s}_{d,2}^{(k,i)} \ldots \underline{s}_{d,NQ}^{(k,i)} \right)^T = \underline{C}^{(k)} \underline{d}^{(k,i)}, \quad k = 1\ldots K, \quad i = 1,2, \tag{7}$$

darstellen. Die Operation nach Gleichung (7) wird als spektrale Spreizung der Datensymbole $\underline{d}_n^{(k,i)}$, $n=1\ldots N$, $k=1\ldots K$, $i=1,2$, mit den teilnehmerspezifischen CDMA-Codes $\underline{c}^{(k)}$, $k=1\ldots K$, bezeichnet. Für das Verhältnis der Rate $1/T_s$ der Datensymbole $\underline{d}_n^{(k,i)}$, $n=1\ldots N$, $k=1\ldots K$, $i=1,2$, und der Rate $1/T_c$, mit der das gespreizte Sendesignal $\underline{s}_d^{(k,i)}$, $k=1\ldots K$, $i=1,2$, des $i$-ten Datenblocks $\underline{d}^{(k,i)}$, $k=1\ldots K$, $i=1,2$, des $k$-ten Teilnehmers gesendet wird, gilt

$$\frac{1/T_c}{1/T_s} = Q. \tag{8}$$

In der Spread-Spectrum-Technik und in CDMA-Mobilfunksystemen werden die Größen $1/T_c$ als Chipfrequenz oder Chiprate, $T_c$ als Chipdauer, $1/T_s$ als Symbolrate und $T_s$ als Symboldauer bezeichnet. Das zeitdiskrete Sendesignal der Mittambel $\underline{m}^{(k)}$, $k=1\ldots K$, des $k$-ten Teilnehmers nach Gleichung (1) und das zeitdiskrete Sendesignal $\underline{s}_d^{(k,i)}$, $k=1\ldots K$, $i=1,2$, der Datenblöcke des $k$-ten Teilnehmers nach Gleichung (7) werden mit der Chiprate $1/T_c$ übertragen. Das zeitdiskrete Sendesignal eines Bursts des $k$-ten Teilnehmers ist mit den Gleichungen (1) und (7) gleich der Folge der Elemente des Vektors

$$\underline{s}^{(k)} = \left( \underline{s}_1^{(k)}, \underline{s}_2^{(k)} \ldots \underline{s}_{2NQ+L_m}^{(k)} \right)^T = \left( \underline{s}_d^{(k,1)^T}, \underline{m}^{(k)^T}, \underline{s}_d^{(k,2)^T} \right)^T, \quad k = 1\ldots K. \tag{9}$$

Ein Systemmodell der Aufwärtsstrecke des betrachteten JD-CDMA-Mobilfunksystems ist in Fig. 2 dargestellt. Die zeitdiskreten Sendesignale $\underline{s}^{(k)}$, $k=1\ldots K$, der $K$ Teilnehmer nach Gleichung (9) werden über $K$ unterschiedliche Übertragungskanäle Ü1,Ü2...Ü$K$ mit den zeitdiskreten Impulsantworten

$$\underline{h}^{(k)} = \left(\underline{h}_1^{(k)}, \underline{h}_2^{(k)} \ldots \underline{h}_W^{(k)}\right)^{\mathrm{T}}, \ \underline{h}_w^{(k)} \in \mathbb{C}, \ w = 1 \ldots W, \ k = 1 \ldots K, \qquad (10)$$

übertragen. Die zeitdiskreten Impulsantworten $\underline{h}^{(k)}$, $k$=1...$K$, der $K$ Übertragungskanäle Ü1,Ü2...Ü$K$ können als zeitdiskrete Signale interpretiert werden, die sich durch Abtastung der analogen Impulsantworten der $K$ Übertragungskanäle mit der Abtastrate 1/$T_c$ ergeben. Die zeitdiskrete Impulsantwort $\underline{h}^{(k)}$, $k$=1...$K$, des $k$-ten Übertragungskanals Ü$k$ wird im folgenden kurz als Kanalimpulsantwort $\underline{h}^{(k)}$, $k$=1...$K$, des $k$-ten Teilnehmers bezeichnet. Mit den Gleichungen (9), (10) und der teilnehmerspezifischen (2$NQ$+$L_m$+W-1)x(2$NQ$+$L_m$) -Matrix

$$\underline{\boldsymbol{H}}^{(k)} = \begin{pmatrix} \underline{h}_1^{(k)} & 0 & \ldots & 0 \\ \underline{h}_2^{(k)} & \underline{h}_1^{(k)} & \ldots & 0 \\ \vdots & \vdots & \vdots & \vdots \\ \underline{h}_W^{(k)} & \underline{h}_{W-1}^{(k)} & \ldots & 0 \\ 0 & \underline{h}_W^{(k)} & \ldots & 0 \\ \vdots & \vdots & \vdots & \vdots \\ 0 & 0 & \ldots & \underline{h}_W^{(k)} \end{pmatrix}, \ k = 1 \ldots K,$$

$$\underline{\boldsymbol{H}}^{(k)} = \left(\underline{H}_{i,j}^{(k)}\right), \ i = 1 \ldots 2NQ + L_{\mathrm{m}} + W - 1, \ j = 1 \ldots 2NQ + L_{\mathrm{m}}, \ k = 1 \ldots K,$$

$$\underline{H}_{l+w-1,l}^{(k)} = \begin{cases} \underline{h}_w^{(k)} & \text{für} & l = 1 \ldots 2NQ + L_{\mathrm{m}}, \\ & & w = 1 \ldots W, \\ & & k = 1 \ldots K, \\ 0 & \text{sonst}, \end{cases} \qquad (11)$$

ergibt sich am Ausgang des Übertragungskanals des $k$-ten Teilnehmers das zeitdiskrete Signal

$$\underline{e}^{(k)} = \left(\underline{e}_1^{(k)}, \underline{e}_2^{(k)} \ldots \underline{e}_{2NQ+L_{\mathrm{m}}+W-1}^{(k)}\right)^{\mathrm{T}} = \underline{\boldsymbol{H}}^{(k)} \underline{\boldsymbol{s}}^{(k)}, \ k = 1 \ldots K. \qquad (12)$$

Das Signal $\underline{e}^{(k)}$, $k$=1...$K$, nach Gleichung (12), das von dem Sendesignal $\underline{s}^{(k)}$, $k$=1...$K$, des $k$-ten Teilnehmers nach Gleichung (9) herrührt, wird im folgenden als Teilnehmersignal des $k$-ten Teilnehmers bezeichnet. Mit Gleichung (12) und der additiven Störung

$$\underline{\boldsymbol{n}} = \left(\underline{n}_1, \underline{n}_2 \ldots \underline{n}_{2NQ+L_{\mathrm{m}}+W-1}\right)^{\mathrm{T}}, \ \underline{n}_i \in \mathbb{C}, \ i = 1 \ldots 2NQ + L_{\mathrm{m}} + W - 1, \qquad (13)$$

ist das Empfangssignal $\underline{e}$ in der Basisstation gleich

$$\underline{e} = \left(\underline{e}_1, \underline{e}_2 \ldots \underline{e}_{2NQ+L_{\mathrm{m}}+W-1}\right)^{\mathrm{T}} = \underline{\boldsymbol{n}} + \sum_{k=1}^{K} \underline{\boldsymbol{H}}^{(k)} \underline{\boldsymbol{s}}^{(k)} = \underline{\boldsymbol{n}} + \sum_{k=1}^{K} \underline{e}^{(k)}. \qquad (14)$$

Die additive Störung $\underline{n}$ repräsentiert thermisches Rauschen, Interferenzen von Gleichkanälen benachbarter Zellen und Interferenzen von Nachbarkanälen sowohl der eigenen als auch benachbarter Zellen. Zellulare Mobilfunksysteme sind interferenzbegrenzt, d.h. die Leistungen der Interferenzen von Gleich- bzw. Nachbarkanälen sind deutlich größer als die Leistung des thermischen Rauschens, weswegen letzteres bei der Betrachtung dieses JD-CDMA-Mobilfunksystems unberücksichtigt bleiben kann. Durch das Verwenden des Vielfachzugriffsverfahrens TDMA ist es notwendig, daß die Teilnehmersignale $\underline{e}^{(k)}$, $k=1...K$, der $K$ Teilnehmer nach Gleichung (12) synchronisiert in der Basisstation eintreffen. Im folgenden wird davon ausgegangen, daß durch einen Synchronisationsmechanismus die Teilnehmersignale $\underline{e}^{(k)}$, $k=1...K$, der $K$ Teilnehmer bis auf einen Bruchteil der Symboldauer $T_s$ synchronisiert in der Basisstation eintreffen.

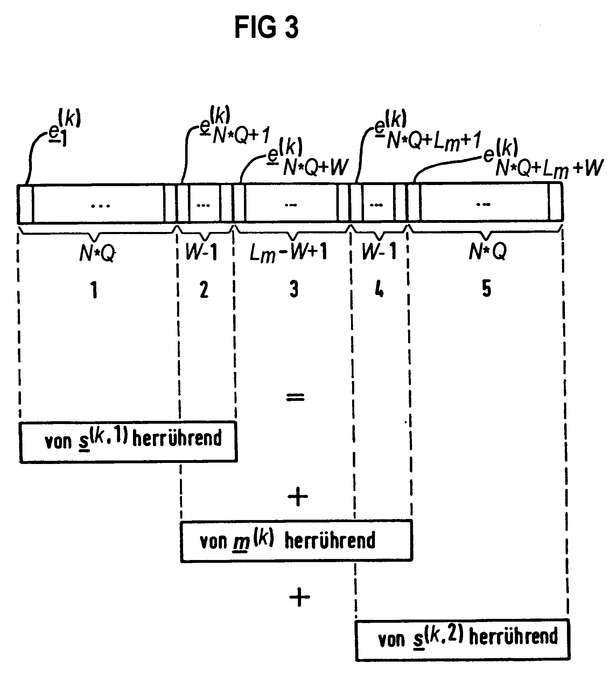

In Fig. 3 ist die Struktur des empfangenen Teilnehmersignals $\underline{e}^{(k)}$, $k=1...K$, des $k$-ten Teilnehmers nach Gleichung (12) dargestellt. Aus Fig. 3 ist zu ersehen, daß das Teilnehmersignal $\underline{e}^{(k)}$, $k=1...K$, des $k$-ten Teilnehmers aus fünf unterschiedlichen Abschnitten besteht. Der erste und der fünfte Abschnitt des Teilnehmersignals $\underline{e}^{(k)}$, $k=1...K$, des $k$-ten Teilnehmers, jeweils aus $NQ$ Elementen bestehend, werden ausschließlich durch den vor der Mittambel M (Fig. 1) gesendeten Datenblock D1 $\underline{d}^{(k,1)}$, $k=1...K$, nach Gleichung (2) bzw. durch den nach der Mittambel M gesendeten Datenblock D2 $\underline{d}^{(k,2)}$, $k=1...K$, nach Gleichung (2) bestimmt. Der zweite und der vierte Abschnitt des Teilnehmersignals $\underline{e}^{(k)}$, $k=1...K$, des $k$-ten Teilnehmers, jeweils aus $W-1$ Elementen bestehend, werden sowohl von den Datenblöcken D1 und D2 $\underline{d}^{(k,i)}$, $k=1...K$, $i=1,2$, als auch vom Mittambelcode $\underline{m}^{(k)}$, $k=1...K$, des $k$-ten Teilnehmers nach Gleichung (1) bestimmt. Der dritte Abschnitt des Teilnehmersignals $\underline{e}^{(k)}$, $k=1...K$, des $k$-ten Teilnehmers wird ausschließlich durch den Mittambelcode $\underline{m}^{(k)}$, $k=1...K$, des $k$-ten Teilnehmers bestimmt und hat

$$L = L_m - W + 1 \qquad (15)$$

Elemente, siehe Fig. 3. Mit der Definition

$$[\underline{\boldsymbol{x}}]_j^i \;\overset{\text{def}}{=}\; \left( \underline{x}_i, \underline{x}_{i+1} \ldots \underline{x}_j \right)^{\mathrm{T}}, \; i < j, \qquad (16)$$

wird der Abschnitt des Teilnehmersignals $\underline{e}^{(k)}$, $k=1...K$, des $k$-ten Teilnehmers, der ausschließlich durch den Mittambelcode $\underline{m}^{(k)}$, $k=1...K$, des $k$-ten Teilnehmers bestimmt ist, siehe Gleichungen (12), (15) und Fig. 3, durch den Vektor

$$\underline{e}_{\mathrm{m}}^{(k)} = \left( \underline{e}_{\mathrm{m},1}^{(k)}, \underline{e}_{\mathrm{m},2}^{(k)} \ldots \underline{e}_{\mathrm{m},L}^{(k)} \right)^{\mathrm{T}} = \left[ \underline{e}^{(k)} \right]_{(NQ+L_{\mathrm{m}})}^{(NQ+W)}, \; k = 1 \ldots K, \qquad (17)$$

dargestellt.

Mit den Gleichungen(14), (17) und dem Abschnitt

$$\underline{\boldsymbol{n}}_{\mathrm{m}} = \left( \underline{n}_{\mathrm{m},1}, \underline{n}_{\mathrm{m},2} \ldots \underline{n}_{\mathrm{m},L} \right)^{\mathrm{T}} = [\underline{\boldsymbol{n}}]_{(NQ+L_{\mathrm{m}})}^{(NQ+W)} \qquad (18)$$

der additiven Störung $\underline{n}$ nach Gleichung (13) ergibt sich in der Basisstation das Empfangssignal, das von den Mittambeln $\underline{m}^{(k)}$, $k=1...K$, der $K$ Teilnehmer und der additiven Störung $\underline{n}$ herrührt, zu

$$\underline{e}_{\mathrm{m}} = \left( \underline{e}_{\mathrm{m},1}, \underline{e}_{\mathrm{m},2} \ldots \underline{e}_{\mathrm{m},L} \right)^{\mathrm{T}} = [\underline{e}]_{(NQ+L_{\mathrm{m}})}^{(NQ+W)} = \underline{\boldsymbol{n}}_{\mathrm{m}} + \sum_{k=1}^{K} \underline{e}_{\mathrm{m}}^{(k)}. \qquad (19)$$

Mit der $L$ x $W$-Matrix

$$\underline{G}^{(k)} \;=\; \begin{pmatrix} \underline{m}_W^{(k)} & \underline{m}_{W-1}^{(k)} & \cdots & \underline{m}_2^{(k)} & \underline{m}_1^{(k)} \\ \underline{m}_{W+1}^{(k)} & \underline{m}_W^{(k)} & \cdots & \underline{m}_3^{(k)} & \underline{m}_2^{(k)} \\ \vdots & \vdots & & \vdots & \vdots \\ \underline{m}_{W+L-2}^{(k)} & \underline{m}_{W+L-3}^{(k)} & \cdots & \underline{m}_L^{(k)} & \underline{m}_{L-1}^{(k)} \\ \underline{m}_{W+L-1}^{(k)} & \underline{m}_{W+L-2}^{(k)} & \cdots & \underline{m}_{L+1}^{(k)} & \underline{m}_L^{(k)} \end{pmatrix}, \; k = 1\dots K,$$

$$\underline{G}^{(k)} \;=\; \left( \underline{G}_{i,j}^{(k)} \right), \quad i = 1\dots L, \; j = 1\dots W, \; k = 1\dots K,$$

$$\underline{G}_{i,j}^{(k)} \;=\; \underline{m}_{W+i-j}^{(k)}, \qquad\qquad (20)$$

die Elemente $\underline{m}_i^{(k)}$, $i=1\dots L_m$, $k=1\dots K$, des Mittambelcodes $\underline{m}^{(k)}$, $k=1\dots K$, des $k$-ten Teilnehmers nach Gleichung (1) enthält, kann das Teilnehmersignal $\underline{e}_m^{(k)}$, $k=1\dots K$, des $k$-ten Teilnehmers nach Gleichung (17) durch

$$\underline{e}_m^{(k)} \;=\; \underline{G}^{(k)}\underline{h}^{(k)}, \quad k = 1\dots K, \qquad\qquad (21)$$

dargestellt werden. Zur kompakten Darstellung des Problems der Kanalschätzung ist es sinnvoll, die Kanalimpulsantworten $\underline{h}^{(k)}$, $k=1\dots K$, der $K$ Teilnehmer nach Gleichung (10) zum Vektor

$$\underline{h} = (\underline{h}_1, \underline{h}_2 \dots \underline{h}_{KW})^{\mathrm{T}} = \left( \underline{h}^{(1)^{\mathrm{T}}}, \underline{h}^{(2)^{\mathrm{T}}} \dots \underline{h}^{(K)^{\mathrm{T}}} \right)^{\mathrm{T}} \qquad\qquad (22)$$

zusammenzufassen. Der Vektor $\underline{h}$ nach Gleichung (22) wird als Vektor aller Kanalimpulsantworten bezeichnet. Mit der $L \times KW$-Matrix

$$\underline{G} \;=\; (\underline{G}^{(1)}, \underline{G}^{(2)} \dots \underline{G}^{(K)}), \qquad\qquad (23)$$

vgl. Gleichung (20), kann das Empfangssignal $\underline{e}_m$ nach Gleichung (19) mit $\underline{h}$ nach Gleichung (22) durch

$$\underline{e}_m = \underline{n}_m + \sum_{k=1}^{K} \underline{G}^{(k)}\underline{h}^{(k)} = \underline{n}_m + \underline{G}\,\underline{h} \qquad\qquad (24)$$

dargestellt werden. Das Empfangssignal $\underline{e}_m$ nach Gleichung (19) bzw. (24) ist die Grundlage der Kanalschätzung in JD-CDMA-Mobilfunksystemen.

Nach der Erfindung wird vor der Datendetektion in der Basisstation das Empfangssignal $\underline{e}$ nach Gleichung (14) von der Interferenz der Mittambeln $\underline{m}^{(k)}$, $k=1\dots K$, nach Gleichung (1) befreit. Mit Gleichung (14), dem Nullvektor

$$\mathbf{0}_u = (\overbrace{0, 0, \dots 0}^{u\ \text{Nullen}})^{\mathrm{T}}, \qquad\qquad (25)$$

der $u$ Komponenten hat, und der Matrix $\underline{H}(k)$, $k=1\dots K$, nach Gleichung (11) erhält man das von der Interferenz der Mittambeln $\underline{m}(k)$, $k=1\dots K$, der $K$ Teilnehmer nach Gleichung (1) befreite Empfangssignal.

7

$$\check{\underline{e}} = \left(\check{e}_1, \check{e}_2 \ldots \check{e}_{2NQ+L_\mathrm{m}+W-1}\right)^\mathrm{T}$$

$$= \underline{e} - \sum_{k=1}^{K} \underline{H}^{(k)} \left(\mathbf{0}_{NQ}{}^\mathrm{T}, \underline{m}^{(k)\mathrm{T}}, \mathbf{0}_{NQ}{}^\mathrm{T}\right)^\mathrm{T}$$

$$= \underline{n} + \sum_{k=1}^{K} \underline{H}^{(k)} \left(\underline{s}_\mathrm{d}^{(k,1)\mathrm{T}}, \underline{m}^{(k)\mathrm{T}}, \underline{s}_\mathrm{d}^{(k,2)\mathrm{T}}\right)^\mathrm{T} - \sum_{k=1}^{K} \underline{H}^{(k)} \left(\mathbf{0}_{NQ}{}^\mathrm{T}, \underline{m}^{(k)\mathrm{T}}, \mathbf{0}_{NQ}{}^\mathrm{T}\right)^\mathrm{T}$$

$$= \underline{n} + \sum_{k=1}^{K} \underline{H}^{(k)} \left(\underline{s}_\mathrm{d}^{(k,1)\mathrm{T}}, \mathbf{0}_{L_\mathrm{m}}{}^\mathrm{T}, \underline{s}_\mathrm{d}^{(k,2)\mathrm{T}}\right)^\mathrm{T}. \tag{26}$$

Mit den zeitdiskreten Sendesignalen $\underline{s}_\mathrm{d}^{(k,i)}$, $k=1\ldots K$, $i=1,2$, der Datenblöcke nach Gleichung (7) geht Gleichung (26) über in

$$\check{\underline{e}} = \underline{n} + \sum_{k=1}^{K} \underline{H}^{(k)} \left(\left(\underline{C}^{(k)} \underline{d}^{(k,1)}\right)^\mathrm{T}, \mathbf{0}_{L_\mathrm{m}}{}^\mathrm{T}, \left(\underline{C}^{(k)} \underline{d}^{(k,2)}\right)^\mathrm{T}\right)^\mathrm{T}. \tag{27}$$

Abschnitte des von der Interferenz der Mittambeln $\underline{m}^{(k)}$, $k=1\ldots K$, befreiten Empfangssignal $\check{e}$ nach Gleichung (26) sind durch die Vektoren

$$\underline{e}_\mathrm{d}^{(1)} = \left(\underline{e}_{\mathrm{d},1}^{(1)}, \underline{e}_{\mathrm{d},2}^{(1)}, \ldots \underline{e}_{\mathrm{d},NQ+W-1}^{(1)}\right)^\mathrm{T} = [\check{\underline{e}}]_{(NQ+W-1)}^{1},$$

$$\underline{e}_\mathrm{d}^{(2)} = \left(\underline{e}_{\mathrm{d},1}^{(2)}, \underline{e}_{\mathrm{d},2}^{(2)}, \ldots \underline{e}_{\mathrm{d},NQ+W-1}^{(2)}\right)^\mathrm{T} = [\check{\underline{e}}]_{(2NQ+L_\mathrm{m}+W-1)}^{(NQ+L_\mathrm{m}+1)} \tag{28}$$

gegeben. Mit den Abschnitten

$$\underline{n}_\mathrm{d}^{(1)} = \left(n_{\mathrm{d},1}^{(1)}, n_{\mathrm{d},2}^{(1)}, \ldots n_{\mathrm{d},NQ+W-1}^{(1)}\right)^\mathrm{T} = [\underline{n}]_{(NQ+W-1)}^{1},$$

$$\underline{n}_\mathrm{d}^{(2)} = \left(n_{\mathrm{d},1}^{(2)}, n_{\mathrm{d},2}^{(2)}, \ldots n_{\mathrm{d},NQ+W-1}^{(2)}\right)^\mathrm{T} = [\underline{n}]_{(2NQ+L_\mathrm{m}+W-1)}^{(NQ+L_\mathrm{m}+1)} \tag{29}$$

der additiven Störung $\underline{n}$ nach Gleichung (13) und der Definition

$$[\underline{X}]_{q,j}^{p,i} \overset{\mathrm{def}}{=} \begin{pmatrix} \underline{X}_{p,i} & \underline{X}_{p,i+1} & \cdots & \underline{X}_{p,j} \\ \underline{X}_{p+1,i} & \underline{X}_{p+1,i+1} & \cdots & \underline{X}_{p+1,j} \\ \vdots & \vdots & & \vdots \\ \underline{X}_{q,i} & \underline{X}_{q,i+1} & \cdots & \underline{X}_{q,j} \end{pmatrix}, \ p < q, \ i < j, \tag{30}$$

können $\underline{e}_\mathrm{d}^{(1)}$ und $\underline{e}_\mathrm{d}^{(2)}$ nach Gleichung (28) durch

$$\underline{e}_d^{(1)} = \underline{n}_d^{(1)} + \sum_{k=1}^{K} \left[ \underline{H}^{(k)} \right]_{(NQ+W-1),(NQ)}^{1,1} \underline{C}^{(k)} \underline{d}^{(k,1)},$$

$$\underline{e}_d^{(2)} = \underline{n}_d^{(2)} + \sum_{k=1}^{K} \left[ \underline{H}^{(k)} \right]_{(2NQ+L_m+W-1),(2NQ+L_m)}^{(NQ+L_m+1),(NQ+L_m+1)} \underline{C}^{(k)} \underline{d}^{(k,2)} \qquad (31)$$

dargestellt werden.

Im störungsfreien Fall rührt $\underline{e}_d^{(1)}$ ausschließlich von den Datenblöcken $\underline{d}^{(k,1)}$, $k=1...K$, der $K$ Teilnehmer nach Gleichung (2) vor der Mittambel und $\underline{e}_d^{(2)}$ ausschließlich von den Datenblöcken $\underline{d}^{(k,2)}$, $k=1...K$, der $K$ Teilnehmer nach Gleichung (2) nach der Mittambel her.

Die kombinierte Kanalimpulsantwort

$$\underline{b}^{(k)} = (b_1^{(k)}, b_2^{(k)} \ldots b_{Q+W-1}^{(k)})^T = \underline{c}^{(k)} * \underline{h}^{(k)}, \quad k = 1 \ldots K, \qquad (32)$$

des $k$-ten Teilnehmers wird durch die zeitdiskrete Faltung der Kanalimpulsantwort $\underline{h}^{(k)}$, $k=1...K$, des $k$-ten Teilnehmers nach Gleichung (10) mit dem teilnehmerspezifischen CDMA-Code $\underline{c}^{(k)}$, $k=1...K$, des $k$-ten Teilnehmers nach Gleichung (4) definiert. Die Operation der zeitdiskreten Faltung wird in Gleichung (32) durch * gekennzeichnet. Mit den kombinierten Kanalimpulsantworten $\underline{b}^{(k)}$, $k=1...K$, nach Gleichung (32) werden $K$ teilnehmerspezifische ($NQ+W$-1)x$N$-Matrizen

$$\underline{A}^{(k)} = \left( \underline{A}_{i,j}^{(k)} \right), \quad i = 1 \ldots NQ + W - 1, \quad j = 1 \ldots N, \quad k = 1 \ldots K,$$

$$\underline{A}_{(n-1)Q+l,n}^{(k)} = \begin{cases} \underline{b}_l^{(k)} & \text{für} \quad n = 1 \ldots N, \\ & \qquad l = 1 \ldots Q + W - 1, \\ & \qquad k = 1 \ldots K, \\ 0 & \text{sonst}, \end{cases} \qquad (33)$$

aufgestellt und zur ($NQ+W$-1)x$KN$-Matrix

$$\underline{A} = (\underline{A}^{(1)}, \underline{A}^{(2)} \ldots \underline{A}^{(K)}) \qquad (34)$$

zusammengefaßt. Die Datenblöcke $\underline{d}^{(k,i)}$, $k=1...K$, $i=1,2$, der $K$ Teilnehmer nach Gleichung (2) werden zu den Vektoren

$$\underline{d}^{(i)} = \left( \underline{d}_1^{(i)}, \underline{d}_2^{(i)} \ldots \underline{d}_{KN}^{(i)} \right)^T$$

$$\underline{d}_{n+(k-1)N}^{(i)} = \underline{d}_n^{(k,i)}, \quad n = 1 \ldots N, \quad k = 1 \ldots K, \quad i = 1,2, \qquad (35)$$

zusammengefaßt. Mit den Gleichungen (34), (35) und den additiven Störungen $\underline{n}_d^{(i)}$, $i=1,2$, nach Gleichung (29) gilt für die Empfangssignale $\underline{e}_d^{(i)}$, $i=1,2$, nach Gleichung (28)

$$\underline{e}_d^{(i)} = \underline{A}\underline{d}^{(i)} + \underline{n}_d^{(i)}, \quad i = 1,2. \qquad (36)$$

Für $Q$ gleich 2, $W$ gleich 4, $N$ gleich 5 und $K$ gleich 2 erhält man beispielsweise folgende anschauliche Darstellung von Gleichung (36):

$$
\underbrace{\begin{pmatrix} \underline{e}_{d,1}^{(i)} \\ \underline{e}_{d,2}^{(i)} \\ \vdots \\ \underline{e}_{d,12}^{(i)} \\ \underline{e}_{d,13}^{(i)} \end{pmatrix}}_{\underline{e}_d^{(i)}} = \underbrace{\left( \underbrace{\begin{array}{ccccc} \underline{b}_1^{(1)} & 0 & 0 & 0 & 0 \\ \underline{b}_2^{(1)} & 0 & 0 & 0 & 0 \\ \underline{b}_3^{(1)} & \underline{b}_1^{(1)} & 0 & 0 & 0 \\ \underline{b}_4^{(1)} & \underline{b}_2^{(1)} & 0 & 0 & 0 \\ \underline{b}_5^{(1)} & \underline{b}_3^{(1)} & \underline{b}_1^{(1)} & 0 & 0 \\ 0 & \underline{b}_4^{(1)} & \underline{b}_2^{(1)} & 0 & 0 \\ 0 & \underline{b}_5^{(1)} & \underline{b}_3^{(1)} & \underline{b}_1^{(1)} & 0 \\ 0 & 0 & \underline{b}_4^{(1)} & \underline{b}_2^{(1)} & 0 \\ 0 & 0 & \underline{b}_5^{(1)} & \underline{b}_3^{(1)} & \underline{b}_1^{(1)} \\ 0 & 0 & 0 & \underline{b}_4^{(1)} & \underline{b}_2^{(1)} \\ 0 & 0 & 0 & \underline{b}_5^{(1)} & \underline{b}_3^{(1)} \\ 0 & 0 & 0 & 0 & \underline{b}_4^{(1)} \\ 0 & 0 & 0 & 0 & \underline{b}_5^{(1)} \end{array}}_{\underline{A}^{(1)}} \quad \underbrace{\begin{array}{ccccc} \underline{b}_1^{(2)} & 0 & 0 & 0 & 0 \\ \underline{b}_2^{(2)} & 0 & 0 & 0 & 0 \\ \underline{b}_3^{(2)} & \underline{b}_1^{(2)} & 0 & 0 & 0 \\ \underline{b}_4^{(2)} & \underline{b}_2^{(2)} & 0 & 0 & 0 \\ \underline{b}_5^{(2)} & \underline{b}_3^{(2)} & \underline{b}_1^{(2)} & 0 & 0 \\ 0 & \underline{b}_4^{(2)} & \underline{b}_2^{(2)} & 0 & 0 \\ 0 & \underline{b}_5^{(2)} & \underline{b}_3^{(2)} & \underline{b}_1^{(2)} & 0 \\ 0 & 0 & \underline{b}_4^{(2)} & \underline{b}_2^{(2)} & 0 \\ 0 & 0 & \underline{b}_5^{(2)} & \underline{b}_3^{(2)} & \underline{b}_1^{(2)} \\ 0 & 0 & 0 & \underline{b}_4^{(2)} & \underline{b}_2^{(2)} \\ 0 & 0 & 0 & \underline{b}_5^{(2)} & \underline{b}_3^{(2)} \\ 0 & 0 & 0 & 0 & \underline{b}_4^{(2)} \\ 0 & 0 & 0 & 0 & \underline{b}_5^{(2)} \end{array}}_{\underline{A}^{(2)}} \right)}_{\underline{A}} \underbrace{\begin{pmatrix} \underline{d}_1^{(i)} \\ \underline{d}_2^{(i)} \\ \underline{d}_3^{(i)} \\ \underline{d}_4^{(i)} \\ \underline{d}_5^{(i)} \\ \underline{d}_6^{(i)} \\ \underline{d}_7^{(i)} \\ \underline{d}_8^{(i)} \\ \underline{d}_9^{(i)} \\ \underline{d}_{10}^{(i)} \end{pmatrix}}_{\underline{d}^{(i)}} + \underbrace{\begin{pmatrix} \underline{n}_{d,1}^{(i)} \\ \underline{n}_{d,2}^{(i)} \\ \vdots \\ \underline{n}_{d,12}^{(i)} \\ \underline{n}_{d,13}^{(i)} \end{pmatrix}}_{\underline{n}_d^{(i)}},
$$

$$(37)$$

$$i = 1,2.$$

Für die Matrizen $\underline{A}^{(k)}$, $k$=1...$K$, nach Gleichung (33) gilt, vgl. Gleichungen (31) und (36),

$$
\begin{aligned}
\underline{A}^{(k)} &= \left[ \underline{H}^{(k)} \right]_{(NQ+W-1),(NQ)}^{1,1} \underline{C}^{(k)} \\
&= \left[ \underline{H}^{(k)} \right]_{(2NQ+L_m+W-1),(2NQ+L_m)}^{(NQ+L_m+1),(NQ+L_m+1)} \underline{C}^{(k)}, \quad k = 1 \ldots K.
\end{aligned} \qquad (38)
$$

Die Empfangssignale $\underline{e}_d^{(i)}$, $i$=1,2, nach Gleichung (28) bzw. (36) sind die Grundlage der Datendetektion in JD-CDMA-Mobilfunksystemen.

Im betrachteten JD-CDMA-Mobilfunksystem wird das Problem der Kanalschätzung durch das Verwenden von Algorithmen zum hochauflösenden und gleichzeitigen Schätzen von mehreren Kanalimpulsantworten $\underline{h}^{(k)}$, $k$ = 1...$K$, gelöst. Die Theorie der Kanalschätzung wurde in einer Reihe von Veröffentlichungen dargestellt, z.B. in Steiner, B.: Ein Beitrag zur Mobilfunk-Kanalschätzung unter besonderer Berücksichtigung synchroner CDMA-Mobilfunksysteme mit Joint-Detection, Fortschritt-Berichte VDI-Reihe 10, Nr. 337, VDI-Verlag, Düsseldorf, 1995, in Steiner, B.; Jung, P.: Optimum and Suboptimum Channel Estimation for the Uplink of CDMA Mobile Radio Systems with Joint Detection. European Transactions on Telecommunications and Related Technologies, Vol. 5 (1994), S. 39-50, und in Steiner, B.; Klein A.: Kanal- und Datenschätzung in synchronen CDMA-Mobilfunksystemen mit Interferenzeliminierung. Kleinheubacher Berichte, Band 36 (1993), S. 253-269.

Das Ziel der Kanalschätzung ist das Ermitteln einer Schätzung $\hat{\underline{h}}$ des Vektors $\underline{h}$ aller Kanalimpulsantworten nach Gleichung (22) aus dem Empfangssignal $\underline{e}_m$ nach Gleichung (19) bzw. (24). Im folgenden wird davon ausgegangen, daß die additive Störung $\underline{n}_m$ nach Gleichung (18) die Erwartung Null hat. Mit Gleichung (25) gilt für den Erwartungswert der additiven Störung $\underline{n}_m$ nach Gleichung (18)

$$\mathrm{E}\{\underline{n}_m\} = \mathbf{0}_L. \qquad (39)$$

Mit den Gleichungen (19), (23) und der hermiteschen $L$ x $L$-Kovarianzmatrix

$$\underline{\boldsymbol{R}}_{\underline{\boldsymbol{n}}_{\mathrm{m}}} = \mathrm{E}\left\{\underline{\boldsymbol{n}}_{\mathrm{m}}\underline{\boldsymbol{n}}_{\mathrm{m}}^{*\mathrm{T}}\right\} = \mathrm{E}\left\{\begin{pmatrix} |\underline{n}_{\mathrm{m},1}|^2 & \underline{n}_{\mathrm{m},1}\underline{n}_{\mathrm{m},2}^* & \cdots & \underline{n}_{\mathrm{m},1}\underline{n}_{\mathrm{m},L}^* \\ \underline{n}_{\mathrm{m},2}\underline{n}_{\mathrm{m},1}^* & |\underline{n}_{\mathrm{m},2}|^2 & \cdots & \underline{n}_{\mathrm{m},2}\underline{n}_{\mathrm{m},L}^* \\ \vdots & \vdots & & \vdots \\ \underline{n}_{\mathrm{m},L}\underline{n}_{\mathrm{m},1}^* & \underline{n}_{\mathrm{m},L}\underline{n}_{\mathrm{m},2}^* & \cdots & |\underline{n}_{\mathrm{m},L}|^2 \end{pmatrix}\right\} \qquad (40)$$

der Störung $\underline{n}_{\mathrm{m}}$ nach Gleichung (18) ist die erwartungstreue Schätzung minimaler Varianz des Vektors $\underline{h}$ aller Kanalimpulsantworten nach Gleichung (22) durch

$$\hat{\underline{h}} = \left(\hat{\underline{h}}_1, \hat{\underline{h}}_2 \ldots \hat{\underline{h}}_{KW}\right)^{\mathrm{T}} = \left(\underline{\boldsymbol{G}}^{*\mathrm{T}}\underline{\boldsymbol{R}}_{\underline{\boldsymbol{n}}_{\mathrm{m}}}^{-1}\underline{\boldsymbol{G}}\right)^{-1}\underline{\boldsymbol{G}}^{*\mathrm{T}}\underline{\boldsymbol{R}}_{\underline{\boldsymbol{n}}_{\mathrm{m}}}^{-1}\underline{\boldsymbol{e}}_{\mathrm{m}} \qquad (41)$$

gegeben. Für normalverteilte Elemente $\underline{n}_{\mathrm{m},i}$, $i=1\ldots L$, der additiven Störung $\underline{n}_{\mathrm{m}}$ nach Gleichung (18) ist $\hat{\underline{h}}$ nach Gleichung (41) auch die Maximum-Likelihood-Schätzung des Vektors $\underline{h}$ aller Kanalimpulsantworten nach Gleichung (22). Für die folgenden Ausführungen zur Kanalschätzung wird angenommen, daß die Elemente $\underline{n}_{\mathrm{m},i}$, $i=1\ldots L$, der additiven Störung $\underline{n}_{\mathrm{m}}$ nach Gleichung (18) unkorreliert sind. Mit der $u$ x $u$-Einheitsmatrix

$$\mathbf{I}_u = (\delta_{i,j}), \quad \delta_{i,j} = 0 \; \forall \; i \neq j, \quad \delta_{i,i} = 1 \; \forall \; i, \quad i,j = 1\ldots u, \qquad (42)$$

und der Varianz $\sigma^2$ der additiven Störung $\underline{n}_{\mathrm{m}}$ nach Gleichung (18) gilt

$$\underline{\boldsymbol{R}}_{\underline{\boldsymbol{n}}_{\mathrm{m}}} = \sigma^2 \mathbf{I}_L. \qquad (43)$$

Mit Gleichung (43) gilt für die Schätzung nach Gleichung (41)

$$\hat{\underline{h}} = \left(\underline{\boldsymbol{G}}^{*\mathrm{T}}\underline{\boldsymbol{G}}\right)^{-1}\underline{\boldsymbol{G}}^{*\mathrm{T}}\underline{\boldsymbol{e}}_{\mathrm{m}} = \underline{h} + \left(\underline{\boldsymbol{G}}^{*\mathrm{T}}\underline{\boldsymbol{G}}\right)^{-1}\underline{\boldsymbol{G}}^{*\mathrm{T}}\underline{\boldsymbol{n}}_{\mathrm{m}} = \underline{h} + \underline{\varepsilon}_{\mathrm{h}}. \qquad (44)$$

Der Vektor $\underline{\varepsilon}_{\mathrm{h}}$ in Gleichung (44) ist der Schätzfehler. Damit die Schätzung nach $\hat{\underline{h}}$ nach Gleichung (44) existiert, muß die Matrix $\underline{\boldsymbol{G}}^{*\mathrm{T}}\underline{\boldsymbol{G}}$ regulär sein. Eine notwendige, aber nicht hinreichende Forderung, die beim Erstellen der Matrix $\underline{\boldsymbol{G}}$ nach Gleichung (23) erfüllt sein muß, damit $\underline{\boldsymbol{G}}^{*\mathrm{T}}\underline{\boldsymbol{G}}$ regulär ist, lautet

$$KW \leq L \qquad (45)$$

Wenn Gleichung (45) erfüllt ist, ist eine hinreichende Forderung für die Regularität der Matrix $\underline{\boldsymbol{G}}^{*\mathrm{T}}\underline{\boldsymbol{G}}$, daß die Matrix $\underline{\boldsymbol{G}}^{*\mathrm{T}}\underline{\boldsymbol{G}}$ nur nichtverschwindende Eigenwerte hat. Der Fall, daß die Matrix $\underline{\boldsymbol{G}}^{*\mathrm{T}}\underline{\boldsymbol{G}}$ Eigenwerte gleich Null hat, obwohl Gleichung (45) gilt, tritt beispielsweise dann auf, wenn zwei oder mehrere Teilnehmer den gleichen Mittambelcode $\underline{m}^{(k)}$, $k=1\ldots K$, nach Gleichung (1) verwenden.

Mit Gleichung (44) erhält man eine Schätzung $\hat{\underline{h}}$ minimaler Varianz für den Vektor $\underline{h}$ aller Kanalimpulsantworten nach Gleichung (22). Über die Qualität der Schätzung $\hat{\underline{h}}$ nach Gleichung (44) wird durch Gleichung (44) keine Aussage gemacht. Im folgenden wird ein Gütekriterium hergeleitet, das eine Bewertung der Schätzung $\hat{\underline{h}}$ nach Gleichung (44) ermöglicht. Einschränkend wird vorausgesetzt, daß die Elemente $\underline{m}_i^{(k)}$, $i=1\ldots L_{\mathrm{m}}$, $k=1\ldots K$, der Mittambelcodes $\underline{m}^{(k)}$, $k=1\ldots K$, nach Gleichung (1) einem binären Symbolvorrat entnommen sind. Es gilt:

$$\underline{m}_i^{(k)} \in \underline{V}_{\mathrm{m}}, \; \underline{V}_{\mathrm{m}} = \{+1,-1\}, \; i = 1\ldots L_{\mathrm{m}}, \; k = 1\ldots K. \qquad (46)$$

Es Zeigt sich, daß die Qualität der Schätzung $\hat{\underline{h}}$ nach Gleichung (44) entscheidend von den Eigenschaften der Mittambelcodes $\underline{m}^{(k)}$, $k=1\ldots K$, nach Gleichung (1) abhängt. Die $K$ Mittambelcodes $\underline{m}^{(k)}$, $k=1\ldots K$, der $K$ Teilnehmer werden im folgenden auch als Codefamilie $\underline{m}^{(k)}$, $k=1\ldots K$, bezeichnet. Zunächst wird die Kanalschätzung durch signalangepaßte Filterung betrachtet. Durch signalangepaßte Filterung ergibt sich die Schätzung des Vektors $\underline{h}$ aller Kanalimpulsantworten nach Gleichung (22) zu

$$\hat{\underline{h}}_{\mathrm{MF}} = \left(\hat{\underline{h}}_{\mathrm{MF},1}, \hat{\underline{h}}_{\mathrm{MF},2} \ldots \hat{\underline{h}}_{\mathrm{MF},KW}\right)^{\mathrm{T}} = \frac{1}{L}\, \underline{\underline{G}}^{*\mathrm{T}} \underline{e}_{\mathrm{m}} = \frac{1}{L}\, \underline{\underline{G}}^{*\mathrm{T}} \underline{\underline{G}}\, \underline{h} + \frac{1}{L}\, \underline{\underline{G}}^{*\mathrm{T}} \underline{n}_{\mathrm{m}}. \quad (47)$$

Die Schätzung $\hat{\underline{h}}_{\mathrm{MF}}$ nach Gleichung (47) ist erwartungstreu, wenn die Matrix $\underline{\underline{G}}^{*\mathrm{T}}\underline{\underline{G}}$ bis auf einen konstanten Faktor gleich der Einheitsmatrix $\mathsf{I}_L$, siehe Gleichung (42), ist. Eine Codefamilie $\underline{m}^{(k)}$, $k=1\ldots K$, wird als Codefamilie mit idealen Korrelationseigenschaften bezeichnet, wenn

$$\underline{\underline{G}}^{*\mathrm{T}}\underline{\underline{G}} = L\mathsf{I}_L \qquad\qquad (48)$$

erfüllt ist. Der Faktor $L$ in Gleichung (48) rührt daher, daß alle Elemente $\underline{m}_i^{(k)}$, $i=1\ldots L$, $k=1\ldots K$, der Codefamilie $\underline{m}^{(k)}$, $k=1\ldots K$, den Betrag Eins haben, und die Elemente auf der Hauptdiagonalen der Matrix $\underline{\underline{G}}^{*\mathrm{T}}\underline{\underline{G}}$ Betragsquadrate der Normen der Spaltenvektoren der Matrix $\underline{\underline{G}}$ nach Gleichung (23) sind. Da alle Spaltenvektoren der Matrix $\underline{\underline{G}}$ nach Gleichung (23) $L$ Elemente haben, siehe Gleichungen (20) und (23), ist die Summe dieser $L$ Betragsquadrate gleich $L$. Zunächst wird von einer Codefamilie mit idealen Korrelationseigenschaften ausgegangen. Das Signal-Stör-Verhältnis des Schätzwertes $\hat{\underline{h}}_{\mathrm{MF},u}$, $u=1\ldots KW$, nach Gleichung (47) ist mit der Varianz $\sigma^2$ der additiven Störung $\underline{n}_{\mathrm{m}}$, siehe Gleichung (43), durch

$$\gamma_{\mathrm{MF},u} = \frac{L\,|\underline{h}_w^{(k)}|^2}{\sigma^2}, \ u = w + (k-1)W, \ k = 1\ldots K, \ w = 1\ldots W, \qquad (49)$$

gegeben. Für den Fall, daß Gleichung (48) nicht gilt, ist die Schätzung $\hat{\underline{h}}_{\mathrm{MF}}$ nach Gleichung (47) nicht ervartungstreu, da die Matrix $\underline{\underline{G}}^{*\mathrm{T}}\underline{\underline{G}}$ nicht verschwindende Elemente außerhalb der Hauptdiagonalen hat.

Das Signal-Stör-Verhätnis des Schätzwertes $\hat{\underline{h}}_u$, $u=1\ldots KW$, nach Gleichung (44) ist mit der Varianz $\sigma^2$ der additiven Störung $\underline{n}_{\mathrm{m}}$, siehe Gleichung (43), und dem $u$-ten Diagonalelement $q_u$, $u=1\ldots KW$, der Matrix $\underline{\underline{G}}^{*\mathrm{T}}\underline{\underline{G}}$ durch

$$\gamma_u = \frac{|\underline{h}_w^{(k)}|^2}{q_u\sigma^2}, \ u = w + (k-1)W, \ k = 1\ldots K, \ w = 1\ldots W, \qquad (50)$$

gegeben. Ein wichtiges Kriterium zum Beurteilen des Schätzwertes $\hat{\underline{h}}_u$, $u=1\ldots KW$, nach Gleichung (44) ist die Degradation

$$d_u/\mathrm{dB} = 10\log_{10}\!\left(\frac{\gamma_{\mathrm{MF},u}}{\gamma_u}\right) = 10\log_{10}(Lq_u), \ u = 1\ldots KW, \qquad (51)$$

des Signal-Stör-Verhältnisses $\gamma_u$, $u=1\ldots KW$, nach Gleichung (50) im Vergleich zum Signal-Stör-Verhältnis $\gamma_{\mathrm{MF},u}$, $u=1\ldots KW$, nach Gleichung (49). Die Degradationen $d_u$, $u=1\ldots KW$, nach Gleichung (51) sind für verschiedene Werte des Parameters $u$ im allgemeinen unterschiedlich. Zum Beurteilen der Schätzung $\underline{h}$ nach Gleichung (44) kann die mittlere Degradation

$$\bar{d}/\mathrm{dB} = 10\log_{10}\!\left(\frac{L}{KW}\sum_{u=1}^{KW} q_u\right) \qquad (52)$$

dienen. Wird eine Codefamilie $\underline{m}^{(k)}$, $k=1\ldots K$, mit idealen Korrelationseigenschaften verwendet, d.h. gilt Gleichung (48), dann ist $\bar{d}$ nach Gleichung (52) gleich Null. Die Degradation $\bar{d}$ nach Gleichung (52) ist ein Maß für den Preis, der für die

Erwartungstreue der Schätzung $\hat{\underline{h}}$ nach Gleichung (44) zu zahlen ist. Im Sinn einer möglichst effizienten Ausnutzung der Energie der Mittambeln sollte $\overline{d}$ nach Gleichung (52) möglichst gering, d.h. kleiner als 1dB, sein.

Eine Methode, die binären Elemente $\underline{m}_i^{(k)}$, $i=1...L_m$, $k=1...K$, nach Gleichung (1) bzw. (46) zu bestimmen, besteht darin, alle Elemente $\underline{m}_i^{(k)}$, $i=1...L_m$, $k=1...K$, durch Verwenden eines Zufallsgenerators auszuwürfeln. Auswürfeln der Elemente $\underline{m}_i^{(k)}$, $i=1...L_m$, $k=1...K$, einer Codefamilie $\underline{m}_{(k)}$, $k=1...K$, bedeutet, daß die Elemente $\underline{m}_i^{(k)}$, $i=1...L_m$, $k=1...K$, die Werte +1 bzw. -1 mit gleicher Wahrscheinlichkeit aus einem Zufallsgenerator erhalten, siehe Gleichung (46), und daß kein weiteres Element $\underline{m}_j^{(k)}$, $j=1...L_m$, $k=1...K$, $i \neq j$, der Codefamilie $\underline{m}^{(k)}$, $k=1...K$, durch das Element $\underline{m}_i^{(k)}$ in seinem Wert beeinflußt wird. Eine wichtige Größe bei der Kanalschätzung ist der Überbestimmtheitsgrad

$$\nu_G = \frac{L}{KW} - 1 \qquad (53)$$

des durch Gleichung (19) gegebenen Schätzproblems. Der Überbestimmtheitsgrad $\nu_G$ nach Gleichung (53) ist die auf $KW$ normierte Differenz aus der Anzahl $L$ der Elemente des Empfangssignals $\underline{e}_m$ nach Gleichung (19) und der Anzahl $KW$ der zu schätzenden Elemente $\underline{h}_w^{(k)}$, $w=1...W$, $k=1...K$, des Vektors $\underline{h}$ aller Kanalimpulsantworten nach Gleichung (22). Gilt $KW$ gleich $L$, ist der Überbestimmtheitsgrad $\nu_G$ nach Gleichung (53) gleich Null, d.h., die Anzahl der Elemente von $\underline{e}_m$ nach Gleichung (19) reicht gerade aus, um die $KW$ Elemente $\underline{h}_w^{(k)}$, $w=1...W$, $k=1...K$, des Vektors $\underline{h}$ aller Kanalimpulsantworten nach Gleichung (22) zu schätzen. Mit Gleichung (45) ist $\nu_G$ immer größer oder gleich Null. In der Aufwärtsstrecke von JD-CDMA-Mobilfunksystemen ist der Überbestimmtheitsgrad $\nu_G$ nach Gleichung (53) typischerweise kleiner als 0,1. Eine systematische Suche nach der Codefamilie $\underline{m}^{(k)}$, $k=1...K$, mit der kleinsten mittleren Degradation $\overline{d}$ nach Gleichung (52) ist aufgrund der großen Anzahl der Freiheitsgrade

$$n_f(\underline{\underline{m}}^{(k)}) = K L_m \qquad (54)$$

der Codefamilien $\underline{m}^{(k)}$, $k=1...K$, im allgemeinen nicht möglich. Ist beispielsweise $K$ gleich 8 und $L_m$ gleich 256 (dies sind typische Werte in JD-CDMA-Mobilfunksystemen), so ergibt sich die Anzahl der Freiheitsgrade $n_f(\underline{m}^{(k)})$ nach Gleichung (54) zu 2048, d.h., es existieren $2^{2048}$ Codefamilien $\underline{m}^{(k)}$, $k=1...K$, deren mittlere Degradationen $\overline{d}$ nach Gleichung (52) bestimmt werden müßten, um die Codefamilie mit der kleinsten mittleren Degradation $\overline{d}$ nach Gleichung (52) zu finden. Die Suche nach Codefamilien $\underline{m}^{(k)}$, $k=1...K$, mit geringen mittleren Degradationen $\overline{d}$ nach Gleichung (52) kann deshalb nur heuristisch erfolgen.

Eine Codefamilie $\underline{m}^{(k)}$, $k=1...K$, die auch bei einem Überbestimmtheitsgrad $\nu_G$ nach Gleichung (53) kleiner als 0,1 eine mittlere Degradation $\overline{d}$ nach Gleichung (52) hat, die kleiner als 1dB ist, kann durch folgende Schritte gefunden werden:

- Verringern der Anzahl der Freiheitsgrade $n_f(\underline{m}^{(k)})$ der Codefamilie $\underline{m}^{(k)}$, $k=1...K$, durch Gewinnen der Codefamilie $\underline{m}(k)$, $k=1...K$, aus einem einzigen periodisierten Grundcode $\underline{m}$, und
- Anwenden eines Optimierungsverfahrens auf den periodisierten Grundcode $\underline{m}$.

Das Gewinnen der Codefamilie aus einem einzigen periodisierten Grundcode $\underline{m}$ hat den zusätzlichen Vorteil, daß dann die Kanalschätzung aufwandsgünstig im Frequenzbereich durch Anwenden der schnellen Korrelation durchgeführt werden kann.

Der Grundgedanke beim Gewinnen der Codefamilie $\underline{m}^{(k)}$, $k=1...K$, aus einem einzigen periodisierten Grundcode $\underline{m}$ besteht darin, das Schätzen mehrerer Kanalimpulsantworten $\underline{h}^{(k)}$, $k=1...K$, nach Gleichung (10) auf das Schätzen einer einzigen Kanalimpulsantwort $\underline{h}$ nach Gleichung (22) zurückzuführen. Mit den Methoden, die zum Schätzen einer einzigen Kanalimpulsantwort angewendet werden, kann dann die Schätzung $\hat{\underline{h}}$ nach Gleichung (44) des Vektors $\underline{h}$ aller Kanalimpulsantworten nach Gleichung (22) ermittelt werden. Ausgangspunkt der Betrachtungen ist ein periodisierter Grundcode

$$\underline{\underline{m}} = \left( \underline{m}_1, \underline{m}_2 \ldots \underline{m}_{L_m + (K-1)W} \right)^T, \qquad (55)$$

für dessen Elemente

$$\underline{m}_i = \underline{m}_{i-P} \quad i = (P+1)...(L_m + (K-1)W), \ P \leq L \qquad (56)$$

gilt. Die $P$ Elemente $\underline{m}_i$, $i=1...P$, einer Periode von $\underline{m}$ nach Gleichung (55) können zum Vektor

$$\underline{\mathbf{m}}_P = (\underline{m}_1, \underline{m}_2 \ldots \underline{m}_P)^T \qquad (57)$$

zusammengefaßt werden. Von besonderem Interesse ist der Fall

$$P = L = KW, \qquad (58)$$

da dann der Überbestimmtheitsgrad $\nu_G$ nach Gleichung (53) gleich Null ist, und weil für $P$ gleich $KW$ der Kanalschätzer besonders aufwandsgünstig realisiert werden kann. Mit Gleichung (58) gilt für den periodisierten Grundcode $\underline{m}$ nach Gleichung (55)

$$\underline{\mathbf{m}} = (\underline{m}_1, \underline{m}_2 \ldots \underline{m}_{P+KW-1})^T. \qquad (59)$$

Aus dem periodisierten Grundcode $\underline{m}$ nach Gleichung (59) wird eine Codefamilie $\underline{m}^{(k)}$ nach der Vorschrift

$$\underline{m}_i^{(k)} = \underline{m}_{i+(K-k)W}, \quad i = 1...L_m, \; k = 1...K \qquad (60)$$

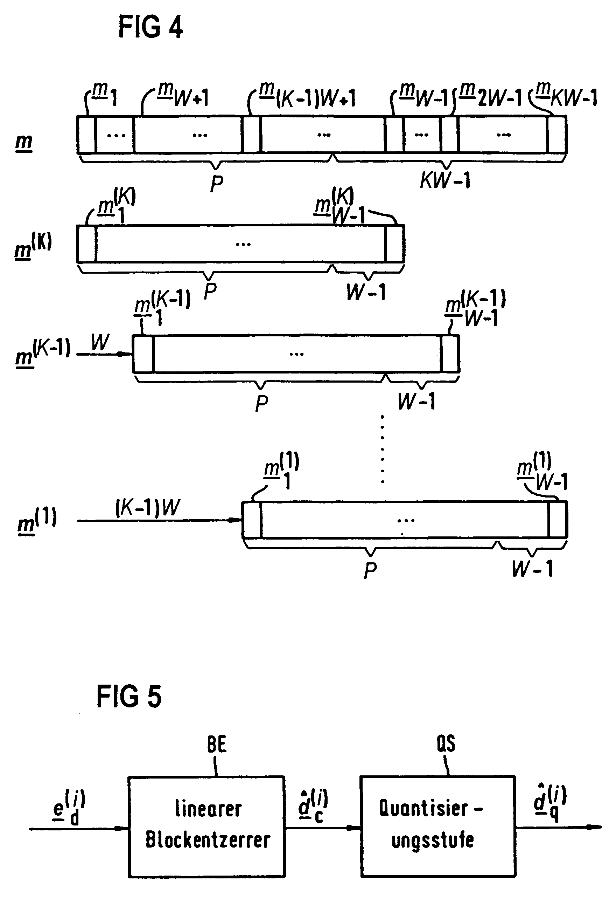

gewonnen. In Fig. 4 ist das Gewinnen einer Codefamilie $\underline{m}^{(k)}$, $k=1...K$, aus einem periodisierten Grundcode $\underline{m}$ nach Gleichung (59) durch Anwenden von Gleichung (60) dargestellt. In Fig. 4 sind Elemente $\underline{m}_i^{(k)}$, $i=1...P+W-1$, $k=1...K$, und $\underline{m}_i$, $i=1...P+KW-1$, die untereinander stehen, gleich. Wird die Codefamilie $\underline{m}^{(k)}$, $k=1...K$, aus einem periodisierten Grundcode $\underline{m}$ hergeleitet, so gilt mit Gleichungen (58), (59) und (60) für die Matrix $\underline{G}$ nach Gleichung (23)

$$\underline{G} = \begin{pmatrix} \underline{m}_P & \underline{m}_{P-1} & \cdots & \underline{m}_2 & \underline{m}_1 \\ \underline{m}_1 & \underline{m}_P & \cdots & \underline{m}_3 & \underline{m}_2 \\ \vdots & \vdots & & \vdots & \vdots \\ \underline{m}_{P-2} & \underline{m}_{P-3} & \cdots & \underline{m}_P & \underline{m}_{P-1} \\ \underline{m}_{P-1} & \underline{m}_{P-2} & \cdots & \underline{m}_1 & \underline{m}_P \end{pmatrix}, \qquad (61)$$

d.h., die Matrix $\underline{G}$ nach Gleichung (61) ist rechtszirkulant und somit durch einen beliebig wählbaren Spalten- bzw. Zeilenvektor mit $P$ Elementen vollständig bestimmt. Da die Matrix $\underline{G}$ nach Gleichung (61) außerdem quadratisch ist, gilt für die Schätzung $\hat{\underline{h}}$ nach Gleichung (44)

$$\hat{\underline{h}} = \left(\underline{G}^{*T}\underline{G}\right)^{-1}\underline{G}^{*T}\underline{e}_m = \underline{G}^{-1}\left(\underline{G}^{*T}\right)^{-1}\underline{G}^{*T}\underline{e}_m = \underline{G}^{-1}\underline{e}_m. \qquad (62)$$

Die Inverse der rechtszirkulanten Matrix $\underline{G}$ nach Gleichung (61) ist ebenfalls rechtszirkulant und werde in der Form

$$\underline{G}^{-1} = \begin{pmatrix} \underline{t}_P & \underline{t}_{P-1} & \cdots & \underline{t}_2 & \underline{t}_1 \\ \underline{t}_1 & \underline{t}_P & \cdots & \underline{t}_3 & \underline{t}_2 \\ \vdots & \vdots & & \vdots & \vdots \\ \underline{t}_{P-2} & \underline{t}_{P-3} & \cdots & \underline{t}_P & \underline{t}_{P-1} \\ \underline{t}_{P-1} & \underline{t}_{P-2} & \cdots & \underline{t}_1 & \underline{t}_P \end{pmatrix} \qquad (63)$$

dargestellt. Die Matrix $\underline{G}^{-1}$ nach Gleichung(63) hat die gleiche Struktur wie die Matrix $\underline{G}$ nach Gleichung (61) und ist ebenfalls durch einen beliebig wählbaren Spalten- bzw. Zeilenvektor mit $P$ Elementen vollständig bestimmt. Wegen Gleichung (46) sind die Matrizen $\underline{G}$ und $\underline{G}^{-1}$ reell. Im digitalen Speicher des Kanalschätzers müssen daher nur $P$ reelle

Elemente $\underline{t}_u$, $u=1...P$, abgelegt werden, um $\underline{\underline{G}}^{-1}$ eindeutig festzulegen. Das Bestimmen von $\underline{\hat{h}}$ nach Gleichung (62) kann durch zyklische Korrelation des Empfangssignals $\underline{e}_m$ nach Gleichung (19) mit einem beliebigen Zeilen- oder Spaltenvektor, beispielsweise mit dem erstem Spaltenvektor

$$\underline{\underline{s}}_1 = (\underline{s}_{1,1}, \underline{s}_{1,2} \cdots \underline{s}_{1,P})^{\mathrm{T}} = (\underline{t}_P, \underline{t}_1 \cdots \underline{t}_{P-2}, \underline{t}_{P-1})^{\mathrm{T}} \quad (64)$$

der Matrix $\underline{\underline{G}}^{-1}$ nach Gleichung (63) erfolgen. Die zyklische Korrelation von $\underline{s}_1$ nach Gleichung (64) mit dem Empfangssignal $\underline{e}_m$ nach Gleichung (19) kann aufwandsgünstig im Frequenzbereich durch schnelle Korrelation durchgeführt werden.

Ziel der sich anschließenden Datendetektion, deren Grundlagen in einer Reihe von Veröffentlichungen dargestellt ist, ist es, Schätzungen der Datenvektoren $\underline{d}^{(i)}$, $i=1,2$, nach Gleichung (35) aus den durch $\underline{n}_d^{(i)}$, $i=1,2$, nach Gleichung (29) gestörten Empfangssignalen $\underline{e}_d^{(i)}$, $i=1,2$, nach Gleichung (28) zu ermitteln. Es werden hier Datendetektoren betrachtet, die aus einem linearen Blockentzerrer mit einer nachfolgenden Quantisierungsstufe oder aus einem Blockentzerrer mit quantisierter Rückkopplung bestehen.

Die Struktur der Datendetektoren, die aus einem linearen Blockentzerrer BE mit einer nachfolgenden Quantisierungsstufe QS bestehen, ist in Fig. 5 dargestellt. Mit den Empfangssignalen $\underline{e}_d^{(i)}$, $i=1,2$, nach Gleichung (28) bzw. (36) ermittelt der lineare Blockentzerrer BE wertekontinuierliche Schätzwerte $\underline{\hat{d}}_{c,n}^{(i)}$, $n=1...KN$, $i=1,2$, der Datensymbole $\underline{d}_n^{(i)}$, $n=1...KN$, $i=1,2$, nach Gleichung (35). Die wertekontinuierlichen Schätzwerte $\underline{\hat{d}}_{c,n}^{(i)}$, $n=1...KN$, $i=1,2$, werden zu den Vektoren

$$\underline{\hat{\underline{d}}}_{\mathrm{c}}^{(i)} = \left( \underline{\hat{d}}_{\mathrm{c},1}^{(i)}, \underline{\hat{d}}_{\mathrm{c},2}^{(i)} \cdots \underline{\hat{d}}_{\mathrm{c},KN}^{(i)} \right)^{\mathrm{T}}, \quad i = 1,2, \quad (65)$$

zusammengefaßt. In der nachfolgenden Quantisierungsstufe QS werden wertediskrete Schätzwerte $\underline{\hat{d}}_{q,n}^{(i)}$, $n=1...KN$, $i=1,2$, der Datensymbole $\underline{d}_n^{(i)}$, $n=1...KN$, $i=1,2$, nach Gleichung (35) durch Quantisieren der wertekontinuierlichen Schätzwerte $\underline{\hat{d}}_{c,n}^{(i)}$, $n=1...KN$, $i=1,2$, nach Gleichung (65) gewonnen. Mit dem Symbolvorrat $\underline{V}_d$ nach Gleichung (3) ist die Quantisierungsvorschrift durch

$$\underline{\hat{d}}_{q,n}^{(i)} = \underline{v}_{d,\mu}, \text{ falls } |\underline{\hat{d}}_{c,n}^{(i)} - \underline{v}_{d,\mu}| < |\underline{\hat{d}}_{c,n}^{(i)} - \underline{v}_{d,\nu}|, \forall \mu \neq \nu, \ \mu,\nu = 1...m, \ n = 1...KN, \ i = 1,2, \quad (66)$$

gegeben. Die wertediskreten Schätzwerte $\underline{\hat{d}}_{q,n}^{(i)}$, $n=1...KN$, $i=1,2$, nach Gleichung (66) werden zu den Vektoren

$$\underline{\hat{\underline{d}}}_{\mathrm{q}}^{(i)} = \left( \underline{\hat{d}}_{\mathrm{q},1}^{(i)}, \underline{\hat{d}}_{\mathrm{q},2}^{(i)} \cdots \underline{\hat{d}}_{\mathrm{q},KN}^{(i)} \right)^{\mathrm{T}}, \quad i = 1,2, \quad (67)$$

zusammengefaßt. Die hier eingesetzten linearen Blockentzerrer sind der bekannte lineare Zero-Forcing-Blockentzerrer (engl.: zero forcing block linear equalizer, ZF-BLE) und der bekannte lineare Minimum-Mean-Square-Error-Blockentzerrer (engl.: minimum mean square error block linear equalizer, MMSE-BLE). In diesem Zusammenhang wird auf Jung, P.; Blanz, J.; Baier, P.W.: Coherent Receiver Antenna Diversity for CDMA Mobile Radio Systems Using Joint Detection. Proc. IEEE International Symposium on Personal, Indoor, and Mobile Radio Communications (PIMRC'93), Yokohama, S. 488-492, 1993, hingewiesen.

Zur Datendetektion können auch Blockentzerrer mit quantisierter Rückkopplung eingesetzt werden, die sowohl wertekontinuierliche Schätzwerte $\underline{\hat{d}}_{c,n}^{(i)}$, $n=1...KN$, $i=1,2$ nach (65) als auch wertediskrete Schätzwerte $\underline{\hat{d}}_{q,n}^{(i)}$, $n=1...KN$, $i=1,2$, nach Gleichung (67) der Datensymbole $\underline{d}_n^{(i)}$, $n=1...KN$, $i=1,2$, nach Gleichung (35) ermitteln. Die vorteilhaft zu verwendenden Blockentzerrer mit quantisierter Rückkopplung sind der bekannte Zero-Forcing-Blockentzerrer mit quantisierter Rückkopplung (engl.: zero forcing block decision feedback equalizer, ZF-BDFE) und der Minimum-Mean-Square-Error-Blockentzerrer mit quantisierter Rückkopplung (engl.: minimum mean square error block division feedback equalizer, MMSE-BDFE).

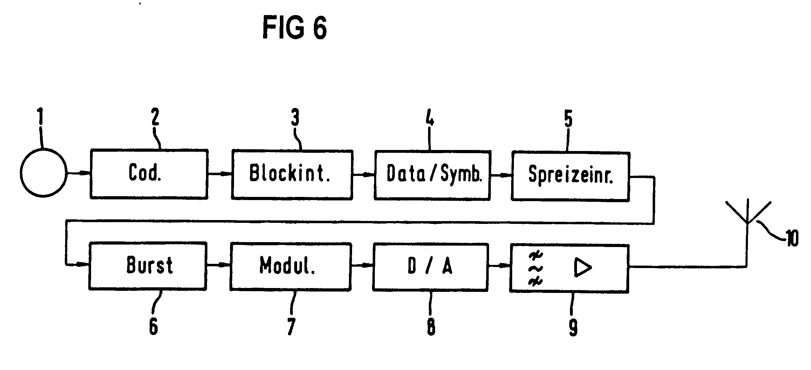

In Fig. 6 ist in einem Beispiel die Struktur eines Teilnehmersenders in der Aufwärtsstrecke eines JD-CDMA-Mobilfunksystems dargestellt. Jeder Sender besteht aus einer Datenquelle 1, einem Kanalcodierer 2, einem Blockverschachteler (Interleaver) 3, einem Daten-zu-Symbol-Wandler 4, einem teilnehmerspezifischen Spreizungsmodulator 5 (Chipdauer des Spreizungscodes = $T_c$), einem Burstbildner 6, einem digitalen Modulator 7, einem Digital/Analog-Wandler 8, einem Sendefilter 9 mit Sendeverstärker sowie aus einer Sendeantenne 10.

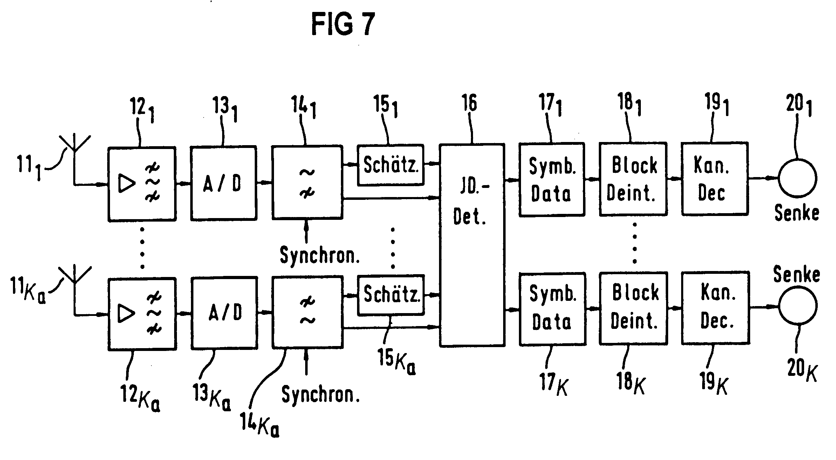

In Fig. 7 ist in einem Beispiel die Struktur eines Empfängers einer Basisstation in einer Funkzelle eines JD-CDMA-Mobilfunksystems dargestellt. Im Empfänger der Basisstation wird kohärente Empfangsantennendiversity verwendet. Der Empfänger besteht daher aus $K_a$ Empfangsantennen 11, $K_a$ Empfangsverstärkern 12 mit Empfangsfiltern, $K_a$ Analog/Digital-Wandlern 13, $K_a$ digitalen Tiefpaßfiltern 14, $K_a$ Kanalschätzern 15, einem gemeinsamen JD-Detektor 16, $K$ Symbol-zu-Daten-Wandlern 17, $K$ Blockentschachtelern (Deinterleaver) 18, $K$ Kanaldecodierern 19 und $K$ Datensenken 20. Das Signal, das über die $K_a$ Empfangsantennen 11 empfangen wird, ist die Summe aus einer additiven stationären Störung und $K$ Teilnehmersignalen, die durch Übertragung von Bursts über zeitvariante und frequenzselektive Mobilfunkkanäle entstehen. Nach der Empfangsverstärkung im Empfangsverstärker 12 folgt mit dem dazugehörigen Empfangsfilter, das als Tiefpaß ausgelegt ist, eine Bandbegrenzung. Die Abtastrate des dann folgenden Analog/Digital-Wandlers 13 beträgt $2/T_c$ ($T_c$ = Chipdauer). Durch eine geeignet ausgebildete Synchronisationseinrichtung werden geringfügige Unterschiede der Verzögerungszeiten der $K_a$ Empfangssignale ausgeglichen. Die $K_a$ Sätze von Abtastwerten werden in den Tiefpaßfiltern 14 digital tiefpaßgefiltert, danach wird eine Dezimierung der Abtastrate auf $1/T_c$ vorgenommen. Die ausschließlich durch Mittambeln bestimmten Segmente der so erhaltenen $K_a$ abgetasteten Empfangssignale werden von den $K_a$ Kanalschätzern verarbeitet und somit $K \cdot K_a$ Kanalimpulsantworten geschätzt. Vor der eigentlichen Datendetektion im JD-Detektor 16 wird entsprechend der Erfindung noch die Interferenz der Mittambeln aller $K$ Teilnehmer im Empfangssignal dadurch beseitigt, daß mit den geschätzten Kanalimpulsantworten die Interferenz der Mittambeln aller $K$ Teilnehmer nachgebildet und vom Empfangssignal subtrahiert wird. Das beim JD-CDMA-Mobilfunksystem insbesondere vorgesehene suboptimale JD-Verfahren verwendet Predetection Maximal-Ratio Combining und ermittelt für einen Burst $2 \cdot K \cdot N$ wertekontinuierliche Schätzwerte der übertragenen Datensymbole. Als JD-Verfahren stehen ZF-BLE, MMSE-BLE, ZF-BDFE und MMSE-BDFE zur Verfügung. Die durch das JD-Verfahren für jeden der $K$ Teilnehmer ermittelten $2 \cdot N$ komplexwertigen und wertekontinuierlichen Schätzwerte der Datensymbole werden mittels der Wandler 17 auf $N$ reelle, wertekontinuierliche Schätzwerte abgebildet. Nach dem Empfang einer bestimmten Anzahl von Bursts werden dann die auf diese Bursts zurückgehenden reellen, wertekontinuierlichen Schätzwerte der Datensymbole als Eingangsgrößen der Kanaldecodierer 19 verwendet. Die $K$ decodierten Datensequenzen werden schließlich in die $K$ Datensenken 20 eingespeist.

## Patentansprüche

1. Verfahren zur Funkübertragung digitaler Signale von einer Sendeseite zu einer Empfangsseite gleichzeitig über im allgemeinen unterschiedliche Kanäle, deren Impulsantworten vor der Detektion der Signale empfangsseitig geschätzt werden, wobei die Signale jeweils zeitdiskret in Form aufeinanderfolgender Bursts, die jeweils aus einer spezifischen Trainingssequenz zur empfangsseitigen Kanalschätzung und aus einem vor und/oder einem nach der Trainingssequenz gesendeten, die eigentlichen Signale in Form vom Datensymbolen beinhaltenden Datenblock bestehen, übertragen und zur Erzielung eines sogenannten Codemultiplex-Betriebs (CDMA = Code Division Multiple Access) mit einem ihnen zugeordneten Spreizcode linear beaufschlagt werden,
**dadurch gekennzeichnet,**
daß empfangsseitig jeweils vor der eigentlichen Signaldetektion eine gegebenenfalls vorliegende Interferenz der Trainingssequenz mit den Datenblöcken dadurch beseitigt wird, daß mit der geschätzten Kanalimpulsantwort diese Interferenz nachgebildet und danach vom empfangenen Signal subtrahiert wird.

2. Verfahren nach Anspruch 1, bei dem von der Sendeseite zur Empfangsseite gleichzeitig $K$ zeitdikrete Sendesignale $\underline{s}^{(k)}$, $k=1...K$, über $K$ im allgemeinen unterschiedliche Kanäle mit den zeitdiskreten Impulsantworten $\underline{h}^{(k)} = (h_1^{(k)}, h_2^{(k)} ... h_W^{(k)})$, $k=1...K$, übertragen werden, wobei die Bursts der Sendesignale jeweils einen Datenblock $\underline{d}^{(k1)} = (\underline{d}_1^{(k1)}, \underline{d}_2^{(k1)} ... \underline{d}_N^{(k1)})^T$, $k=1...K$, vor der Trainingssequenz, d.h. einer sogenannten Mittambel $\underline{m}^{(k)} = (m_1^{(k)}, m_2^{(k)} ... m_{Lm}^{(k)}$, $k=1...K$, und einen Datenblock $\underline{d}^{(k2)} = (\underline{d}_1^{(k2)}, \underline{d}_2^{(k2)} ... \underline{d}_N^{(k2)})^T$, $k=1...K$, nach dieser Mittambel $\underline{m}^{(k)}$ enthalten, wobei $\underline{d}_1^{(k1)}$, $\underline{d}_2^{(k1)}$... und $\underline{d}_1^{(k2)}$, $\underline{d}_2^{(k2)}$... die Datensymbole, denen vor der Übertragung noch ein ihnen zugeordneter spezifischer Spreizcode $\underline{c}^{(k)} = (c_1^{(k)}, c_2^{(k)} ... c_Q^{(k)})$, $k=1...K$, linear aufmoduliert wird, und $m_1^{(k)}, m_2^{(k)}$... die im Spreizcodetakt (=Chiptakt $T_c$) gesendeten Mittambelelemente sind, und wobei empfangsseitig Schätzungen $\underline{h}^{(k)} = (h_1^{(k)}, h_2^{(k)} ... h_W^{(k)})$, $k=1...K$, der Kanalimpulsantworten vorliegen,
**dadurch gekennzeichnet,**
daß sich ein von der Symbol-Interferenz der Mittambeln $\underline{m}^{(k)}$, $k=1...K$, mit den benachbarten Datenblöcken $\underline{d}_1^{(k)}$ und $\underline{d}_2^{(k)}$, $k=1...K$ befreites Empfangssignal $\check{e}$ unter Berücksichtigung eines additiven Störsignals $\underline{n} = (n_1, n_2 ... n_{Q+W-1})$ durch die Ausführung folgender Funktion ergibt:

$$\underline{\check{e}} = \underline{n} + \sum_{k=1}^{K} \underline{H}^{(k)}((\underline{c}^{(k)}\underline{d}^{(k,1)})^T, 0_{Lm}^T, (\underline{c}^{(k)}\underline{d}^{(k,2)})^T)^T ,$$

mit den $(2NQ+L_m+W-1)\times(2NQ+L_m)$ -Matrizen

$$\underline{H}^{(k)} = (\underline{H}_{i,j}^{(k)}), \quad i=1\ldots2NQ+L_m+W-1, \quad j=1\ldots2NQ+L_m, \quad k=1\ldots K$$

$$\underline{H}_{l+w-1,l}^{(k)} = \begin{cases} \underline{h}_w^{(k)} & \text{für} \quad l=1\ldots2NQ+Lm, \\ & w=1\ldots W \\ & k=1\ldots K \\ 0 & \text{sonst,} \end{cases}$$

und mit den *NQxN*-Matrizen

$$\underline{C}^{(k)} = (C_{i,j}^{(k)}), \quad i=1\ldots NQ, \quad j=1\ldots N, \quad k=1\ldots K,$$

$$\underline{C}_{q+(n-1)Q,n}^{(k)} = \begin{cases} \underline{C}_q^{(k)} & \text{für} \quad n=1\ldots N \\ & q=1\ldots Q \\ & k=1\ldots K \\ 0 & \text{sonst,} \end{cases}$$

und mit der vorgegebenen Elementezahl $L_m$ der Mittambeln $\underline{m}^{(k)}$, wobei die Operation des Transponierens eines Vektors bzw. einer Matrix durch $(\cdot)^T$, Vektoren durch fett geschriebene Kleinbuchstaben, Matrizen durch fett geschriebene Großbuchstaben und komplexe Werte unterstrichen dargestellt werden.

3. Verfahren nach Anspruch 2,
   **dadurch gekennzeichnet,**
   daß zur Kanalschätzung aus dem von den Mittamheln $\underline{m}^{(k)}$, $k$=1...$K$ herrührenden Empfangssignal $\underline{e}_m$ und der additiven Störung $\underline{n}_m$ eine erwartungstreue Schätzung $\hat{\underline{h}}$ minimaler Varianz für den Vektor $\underline{h}$ aller Kanalimpulsantworten durchgeführt wird.

4. Verfahren nach Anspruch 3,
   **dadurch gekennzeichnet,**
   daß zur Kanalschätzung signalangepaßte Filter eingesetzt werden.

5. Verfahren nach einem der Ansprüche 2 bis 4,
   **dadurch gekennzeichnet,**
   daß für den Mittambelcode die Codefamilie $\underline{m}^{(k)}$, $k$=1...$K$, aus einem einzigen periodisierten Grundcode $\underline{m}$ gewonnen wird.

6. Verfahren nach Anspruch 5,
   **dadurch gekennzeichnet,**
   daß die Kanalschätzung im Frequenzbereich durch Anwendung der schnellen Korrelation durchgeführt wird.

7. Verfahren nach einem der vorhergehenden Ansprüche,
   **gekennzeichnet durch**
   die Verwendung in einem zellular aufgebauten Funksystem mit mehreren Teilnehmern und einer Basisstation pro Funkzelle, wobei die Übertragung der Signale in einer Funkzelle unter Anwendung des sogenannten JD-CDMA (Joint Detection-Code Division Multiple Access = Codemultiplex mit gemeinsamer Detektion)-Verfahrens vorgenommen wird, bei dem eine Vielzahl von Nutzverbindungen im gleichen HF-Frequenzband parallel abgewickelt wird, wozu die Nutzsignale sendeseitig mit jeweils einem unterschiedlichen Spreizcode um einen bestimmten Faktor in der Frequenzachse gespreizt und am Empfangsort unter Verwendung dieses Spreizcodes wieder decodiert werden, und bei dem in den Empfangseinrichtungen zur Signaldetektion jeweils eine sogenannte JD-CDMA-spezifische Signaldetektionseinheit verwendet wird.

8. Verfahren nach Anspruch 7,
   **dadurch gekennzeichnet,**
   daß zur Datendetektion ein linearer Datenblockentzerrer (BE) mit nachfolgender Quantisierungsstufe (QS) verwendet wird, wobei im Blockentzerrer wertekontinuierliche Schätzwerte der Datensymbole ermittelt werden, die zu Vektoren zusammengefaßt werden, und daß dann in der Quantisierungsstufe wertediskrete Schätzwerte der Datensymbole durch Quantisieren der wertekontinuierlichen Schätzwerte gewonnen werden.

9. Verfahren nach Anspruch 7,
**dadurch gekennzeichnet,**
daß als linearer Datenblockentzerrer der sogenannte lineare Zero-Forcing-Blockentzerrer (ZF-BLE) verwendet wird.

10. Verfahren nach Anspruch 8,
**dadurch gekennzeichnet,**
daß als linearer Datenblockentzerrer der sogenannte Minimum-Mean-Square-Error-Blockentzerrer (MMSE-BLE) verwendet wird.

11. Verfahren nach Anspruch 7,
**dadurch gekennzeichnet,**
daß zur Datendetektion ein Blockentzerrer mit quantisierter Rückkopplung verwendet wird.

12. Verfahren nach Anspruch 11,
**dadurch gekennzeichnet,**
daß als Blockentzerrer ein sogenannter Zero-Forcing-Blockentzerrer mit quantisierter Rückkopplung (ZF-BDFE) verwendet wird.

13. Verfahren nach Anspruch 11,
**dadurch gekennzeichnet,**
daß als Blockentzerrer ein sogenannter Minimum-Mean-Square-Error-Blockentzerrer mit quantisierter Rückkopplung (MMSE-BDFE) verwendet wird.

14. Verfahren nach einem der Ansprüche 7 bis 13,
**gekennzeichnet durch**
die Verwendung im Rahmen eines hybriden Vielfachzugriffsverfahrens, das in einer Kombination von Codemultiplex, Frequenzmultiplex (FDMA= Frequency Division Multiple Access) und Zeitmultiplex (TDMA = Time Division Multiple Access) besteht.

15. System zur Funkübertragung digitaler Signale von einer Sendeseite zu einer Empfangsseite gleichzeitig über im allgemeinen unterschiedliche Kanäle, deren Impulsantworten vor der Detektion der Signale empfangsseitig geschätzt werden, wobei die Signale jeweils zeitdiskret in Form aufeinanderfolgender Bursts, die jeweils aus einer spezifischen Trainingssequenz zur empfangsseitigen Kanalschätzung und aus einem vor und/oder einem nach der Trainingssequenz gesendeten, die eigentlichen Signale in Form vom Datensymbolen beinhaltenden Datenblock bestehen, übertragen und zur Erzielung eines sogenannten Codemultiplex-Betriebs (CDMA = Code Division Multiple Access) mit einem ihnen zugeordneten Spreizcode linear beaufschlagt werden,
**dadurch gekennzeichnet,**
daß auf der Empfangsseite ein digitaler Signalprozessor vorgesehen ist, der vor der eigentlichen Signaldetektion eine gegebenenfalls vorliegende Interferenz der Trainingssequenz beseitigt, indem mit der geschätzten Kanalimpulsantwort diese Interferenz nachgebildet und vom empfangenen Signal subtrahiert wird.

16. System nach Anspruch 15,
**dadurch gekennzeichnet,**
daß der Signalprozessor mehrere Kanalschätzer (15) und einen gemeinsamen JD-Detektor (16) umfaßt.

17. System nach Anspruch 15 oder 16,
**dadurch gekennzeichnet,**
daß als Signalprozessor ein Mikroprozessor vorgesehen ist.

## FIG 1

| 1 | 2 | ... | N | 1 | 2 | ... | L_m | 1 | 2 | ... | N |

$T_C$

$T_C$

$T_S$

D1 — Datenblock

M — Mittambel

D2 — Datenblock

## FIG 2

$\underline{s}^{(1)}$ → Ü1 $\underline{h}^{(1)}$ → $\underline{e}^{(1)}$

$\underline{s}^{(2)}$ → Ü2 $\underline{h}^{(2)}$ → $\underline{e}^{(2)}$

$\underline{s}^{(K)}$ → ÜK $\underline{h}^{(K)}$ → $\underline{e}^{(K)}$

$\underline{n}$

→ $\underline{e}$

# FIG 3

$$\underline{e}_1^{(k)} \qquad \underline{e}_{N*Q+1}^{(k)} \qquad \underline{e}_{N*Q+W}^{(k)} \qquad \underline{e}_{N*Q+L_m+1}^{(k)} \qquad e_{N*Q+L_m+W}^{(k)}$$

| ... | ... | -- | ... | -- |

| $N*Q$ | $W$-1 | $L_m$-$W$+1 | $W$-1 | $N*Q$ |
|:---:|:---:|:---:|:---:|:---:|
| 1 | 2 | 3 | 4 | 5 |

=

von $\underline{s}^{(k,1)}$ herrührend

+

von $\underline{m}^{(k)}$ herrührend

+

von $\underline{s}^{(k,2)}$ herrührend

## FIG 4

$$\underline{m}_1 \quad \underline{m}_{W+1} \quad \underline{m}_{(K-1)W+1} \quad \underline{m}_{W-1} \quad \underline{m}_{2W-1} \quad \underline{m}_{KW-1}$$

$\underline{m}$

$P$ $\qquad$ $KW-1$

$$\underline{m}^{(K)}_1 \qquad \underline{m}^{(K)}_{W-1}$$

$\underline{m}^{(K)}$ ...

$P$ $\qquad$ $W-1$

$$\underline{m}^{(K-1)}_1 \qquad \underline{m}^{(K-1)}_{W-1}$$

$\underline{m}^{(K-1)}$ $\xrightarrow{W}$ ...

$P$ $\qquad$ $W-1$

$$\underline{m}^{(1)}_1 \qquad \underline{m}^{(1)}_{W-1}$$

$\underline{m}^{(1)}$ $\xrightarrow{(K-1)W}$ ...

$P$ $\qquad$ $W-1$

## FIG 5

$$\underline{e}^{(i)}_d \rightarrow \boxed{\begin{array}{c}\text{BE}\\ \text{linearer}\\ \text{Blockentzerrer}\end{array}} \xrightarrow{\hat{\underline{d}}^{(i)}_c} \boxed{\begin{array}{c}\text{QS}\\ \text{Quantisier-}\\ \text{ungsstufe}\end{array}} \xrightarrow{\hat{\underline{d}}^{(i)}_q}$$

FIG 6

# FIG 7

EP 0 767 543 A2